(19) **Europäisches Patentamt**

**European Patent Office**

**Office européen des brevets**

(11) **EP 1 393 803 A1**

(12) # EUROPEAN PATENT APPLICATION

(43) Date of publication:
**03.03.2004 Bulletin 2004/10**

(51) Int Cl.⁷: **B01J 35/00**, B01J 21/06,
C01G 23/04

(21) Application number: **02019367.8**

(22) Date of filing: **29.08.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Ecodevice Corporation
Tokyo 105-0003 (JP)**

(72) Inventor: **Sugihara, Shinichi
Yokohama-shi, Kanagawa 227-0052 (JP)**

(74) Representative: **Patentanwälte
Ruff, Wilhelm, Beier, Dauster & Partner
Kronenstrasse 30
70174 Stuttgart (DE)**

(54) **Light-responsive material and method of manufacturing the same**

(57) To provide a novel light responsive material having responsive property with visible light despite essentially not comprising oxygen defects, a method of manufacturing thereof, and applications thereof. That is, the light-responsive material in the form of rutile-type titanium oxide with a light source peak wavelength of 520 nm and activity due to the effect of light with a full width at half maximum of 20 nm. The activity due to the effect of light is NO elimination activity. The method of manufacturing the light-responsive material comprising the treatment with nitrogen plasma, or the treatment in an ammonia atmosphere of rutile-type titanium oxide.

## Description

### Technical Field

The present invention relates to a visible light-responsive material based on rutile-type titanium oxide having a visible light-responsive property, a method of manufacturing the same, and applications of this light-responsive material. The present invention further relates to a visible light-responsive paint employing the light-responsive material, a coating film, and articles having coating films comprising the light-responsive material.

The visible light-responsive coating film and the articles having the visible light responsive coating films of the present invention are useful as photocatalysts, photosensors, photocell materials, optical antipollution materials, optical hydrophilic materials, and optical antimicrobial materials.

### Technical Background

The use of photocatalysts comprising anatase titanium dioxide in antibacterial tile, self-cleaning building materials, ultrahydrophilic materials, nonodorous and deodorizing materials, water purification, cancer treatment, and the like is known (The Photoclean Revolution (Akira Fujishima et al.)), and various applications are being actively developed. Specifically, for example, WO 94/11092 discloses an air treatment method based on a photocatalyst used under indoor lighting. Japanese Unexamined Patent Publication (KOKAI) Heisei No. 7-102678 discloses a method of preventing in-hospital infection using a photocatalyst. Japanese Unexamined Patent Publication (KOKAI) Heisei Nos. 8-67835 and 8-164334 disclose antibacterial coating materials. And WO 96/29375 discloses an ultrahydrophilic material.

However, anatase titanium dioxide requires ultraviolet light of 400 nm or less as excitation radiation. By contrast, the solar radiation and artificial lighting that are available as sources of excitation radiation comprise much more visible radiation than ultraviolet radiation. However, photocatalysts comprising the above-mentioned titanium dioxide unfortunately are nearly incapable of exploiting visible radiation, and from the perspective of energy conversion efficiency, are extremely inefficient. This inefficiency constitutes a substantial barrier to their practical application.

Accordingly, photocatalysts capable of exploiting visible radiation are gradually being developed. For example, Japanese Unexamined Patent Publication (KOKAI) Heisei No. 10-146530 discloses a titanium oxide photocatalyst with an O/Ti atom number ratio in layers deeper than the surface that is lower than the O/Ti atom number ratio at the surface. This photocatalyst is formed by heating a complex of titanium alkoxide and a chelating agent (for example, acetyl acetone) at about 500°C under an oxidizing atmosphere. However, there are problems in that since titanium alkoxide and a chelating agent (for example, acetyl acetone) are employed in this method, the manufacturing cost is high, and since it is necessary to ensure different O/Ti atom number ratios on the surface and in the interior, it is extremely difficult to control manufacturing conditions. Further, it is stated in the embodiments that activity is achieved by irradiation with light of 420 nm or above, but the activity achieved is quite low and is not of a degree suited to actual practice.

A catalyst having activity under irradiation with visible light that is comprised of titanium dioxide having stable oxygen defects is also known (WO 00/10706). That photocatalyst is obtained, for example, by subjecting a starting material in the form of ST-01, a known ultraviolet radiation type photocatalyst manufactured by Ishihara Sangyo, to a plasma treatment with hydrogen, argon, or the like. ST-01, manufactured by Ishihara Sangyo, is a material having chiefly ultraviolet radiation activity, and exhibits visible radiation activity up to nearly 420 nm, although of a degree much lower than that for ultraviolet radiation. However, it exhibits essentially no activity at 470 nm or more. By contrast, the photocatalyst described in above-cited WO 00/10706 is capable of photooxidation of NO with light having a wavelength of not just around 420 nm, but up to about 600 nm, and can be considered a true visible light photocatalyst.

However, the above-mentioned photocatalyst comprises anatase-type titanium dioxide having oxygen defects. These oxygen defects are stable for a certain period, but when employed for extended periods outdoors, for example, sometimes gradually disappear. Having these oxygen defects has been thought to afford certain disadvantages. For example, they interact with certain inorganic binders, sometimes reducing activity.

Accordingly, the object of the present invention is to provide a novel light responsive material having responsive property with visible light despite essentially not comprising oxygen defects, and a method of manufacturing the same.

A further object of the present invention is to provide applications for this novel light-responsive material.

### Disclosure of the Invention

The means of solving the above-stated problem is as follows:

(1) A light-responsive material in the form of rutile-type titanium oxide with activity due to the effect of light from a light source with a peak wavelength of 520 nm and a full width at half maximum of 20 nm.

(2) The light-responsive material according to (1) wherein the activity due to the effect of light is NO elimination activity.

(3) The light-responsive material according to (1) or (2) in the form of nitrogen element-containing rutile-type titanium oxide.

(4) The light-responsive material according to any of (1) to (3) having activity due to the effect of light from a light source with a peak wavelength of 630 nm and a full width at half maximum of 20 nm.

(5) The light-responsive material according to any of (1) to (4) wherein a Ti-N bond is observed by X-ray photoelectron spectryscopy.

(6) The light-responsive material according to any of (3) to (5) wherein the ratio of titanium to oxygen plus nitrogen are within a range of 1.5 to 2.4.

(7) A method of manufacturing the light-responsive material according to any of (1) to (6) comprising the treatment of starting material rutile-type titanium oxide with nitrogen plasma.

(8) A method of manufacturing the light-responsive material according to any of (1) to (6) comprising the heat treatment of starting material rutile-type titanium oxide in an ammonia atmosphere.

(9) The method of manufacturing according to (7) or (8) wherein the starting material rutile-type titanium oxide is titanium oxide obtained by a wet method or dry method.

(10) A method of activating a light-responsive material by irradiating the light-responsive material according to any of (1) to (6) with a light-emitting diode or organic electroluminescent matetial.

(11) The method according to (10) wherein a gas comprising nitrogen oxide is brought into contact with a light-responsive material that has been irradiated with light comprising at least a portion of light in the visible light range to reduce the concentration of the nitrogen oxides in said gas, and said light-responsive material is the light-responsive material according to any of (1) to (6).

(12) The method according to (11) wherein said light is light from a light-emitting diode.

(13) The method according to (12) wherein said light-emitting diode is a purple light-emitting diode, blue light-emitting diode, green light-emitting diode, yellow light-emitting diode, or white light-emitting diode.

(14) The method according to any of (11) to (13) wherein a device having a layer comprising a light-responsive material on a light-emitting diode substrate is employed.

(15) The method according to (14) wherein the light-emitting diode substrate comprises at least a light-emitting diode and a light-passing layer provided thereon, and said layer containing a light-responsive material is provided on said light-passing layer.

(16) The method according to any of (11) to (15) wherein said gas comprising nitrogen oxide is air.

(17) A visible light-responsive paint comprising a binder, a light-responsive material, and a solvent, characterized in that said light-responsive material is the light-responsive material according to any of (1) to (6).

(18) The paint according to (17) wherein said binder is an organic binder or an inorganic binder.

(19) The paint according to (17) or (18) wherein said solvent is water or an organic solvent.

(20) The paint according to (18) or (19) wherein said organic binder is at least one binder selected from the group consisting of fluoropolymers, silicon polymers, acrylic resins, epoxy resins, polyester resins, melamine resins, urethane resins, and alkyd resins.

(21) The paint according to (18) or (19) wherein said inorganic binder is at least one binder selected from the group consisting of alkyl silicate, products obtained by hydrolyzing hydrolyte silicon compounds such as halogenated silicon and partially hydrolyzed products thereof; polycondensation products of organic polysiloxane compound; silicon compounds such as silica, colloidal silica, water-glass, and organopolysiloxanes; phosphates such as zinc phosphate and aluminum phosphate; diphosphates; cement; calcium oxide; gypsum; frit for enamel; glost for glass lining; plaster; and diatomaceous earth.

(22) The paint according to any of (17) to (21) further comprising a granular substance, an adsorption agent and/or a carrier.

(23) The paint according to (22) wherein said granular substance is an inorganic or organic particle having an average particle size of 1 nm to 100 micrometers, and said adsorption agent and carrier are activated charcoal, zeolite, or silica gel.

(24) A coating film in the form of a visible light-responsive coating film comprising a binder and a light-responsive material, characterized in that said light-responsive material is the light-responsive material according to any of(1) to (6).

(25) The coating film according to (24) wherein said binder is an organic binder or inorganic binder.

(26) The coating film according to (25) wherein said organic binder is at least one binder selected from the group consisting of fluoropolymers, silicon polymers, acrylic resins, epoxy resins, polyester resins, melamine resins, urethane resins, and alkyd resins.

(27) The coating film according to (25) wherein said inorganic binder is at least one binder selected from the group consisting of alkyl silicate, products obtained by hydrolyzing hydrolyte silicon compounds such as halogenated silicon and partially hydrolyzed products thereof; polycondensation products of organic polysiloxane compound; silicon compounds such as silica, colloidal silica, water-glass, and organopolysiloxanes; phosphates such as zinc phosphate and aluminum phosphate; diphosphates; cement; calcium oxide; gypsum; frit for enamel; glost for glass lining; plaster; and diatomaceous earth.

(28) The coating film according to any of (24) to (27) further comprising a granular substance, adsorption agent and/or carrier.

(29) The coating film according to (28) wherein said granular substance is an inorganic or organic particle having an average particle size of from 1 to 100 micrometers, and said adsorption agent and carrier are activated charcoal, zeolite, or silica gel.

(30) An article having on at least a portion of the surface thereof the coating film according to any of (24) to (29).

(31) The article according to (30) wherein said article is composed of ceramics, glass, or other inorganic substance; plastic, rubber, wood, paper, or other organic substance; metals such as aluminum; or metallic material of alloys such as steel.

(32) A method of sterilizing, preventing algae, preventing mildew and/or preventing stain, employing the light-responsive material according to any of (1) to (6).

(33) A method of clarifying water employing the light-responsive material according to any of (1) to (6).

(34) A method of photo-decomposition of water in which the light-responsive material according to any of (1) to (6) irradiated at least a portion of light in the visible light range is employed.

**Brief Description of the Drawings**

Fig. 1 shows an XRD of a sample obtained in Embodiment 1.

Fig. 2 shows an XRD of a sample obtained in Embodiment 2.

Fig. 3 shows the light-emitting spectra of a blue light-emitting diode (BLUE), green light-emitting diode (GREEN), and white light-emitting diode (WHITE).

Fig. 4 shows reflectance spectra for the light-responsive material of the present invention obtained in Embodiments 7 to 11 and Catalyst Society Reference Catalyst JRC-TIO-3 (rutile) employed as starting material.

Fig. 5 shows the results of XRD measurement of the light-responsive material of the present invention obtained in Embodiments 7 to 11 and Catalyst Society Reference Catalyst JRC-TIO-3 (rutile) employed as starting material.

Fig. 6 shows the NO elimination activity of the light-responsive material of the present invention obtained in Embodiments 7 to 11.

Fig. 7 shows the results of a hydrogen-generating reaction of the light-responsive material of the present invention obtained in Embodiment 7.

Fig. 8 shows the results of a hydrogen-generating reaction of the light-responsive material of the present invention obtained in Embodiment 8.

Fig. 9 shows the results of a hydrogen-generating reaction of the light-responsive material of the present invention obtained in Embodiment 9.

Fig. 10 shows the results of a hydrogen-generating reaction of the light-responsive material of the present invention obtained in Embodiment 10.

Fig. 11 shows the results of a hydrogen-generating reaction of the light-responsive material of the present invention obtained in Embodiment 11.

Fig. 12 shows the results of an oxygen-generating reaction of the light-responsive material of the present invention obtained in Embodiment 7.

Fig. 13 shows the results of an oxygen-generating reaction of the light-responsive material of the present invention obtained in Embodiment 8.

Fig. 14 shows the results of an oxygen-generating reaction of the light-responsive material of the present invention obtained in Embodiment 9.

Fig. 15 shows the results of an oxygen-generating reaction of the light-responsive material of the present invention obtained in Embodiment 10.

Fig. 16 shows the results of an oxygen-generating reaction of the light-responsive material of the present invention obtained in Embodiment 11.

Fig. 17 shows the results of XRD measurement of the sample of Embodiment 13 and JRC-TIO-3 employed as starting material.

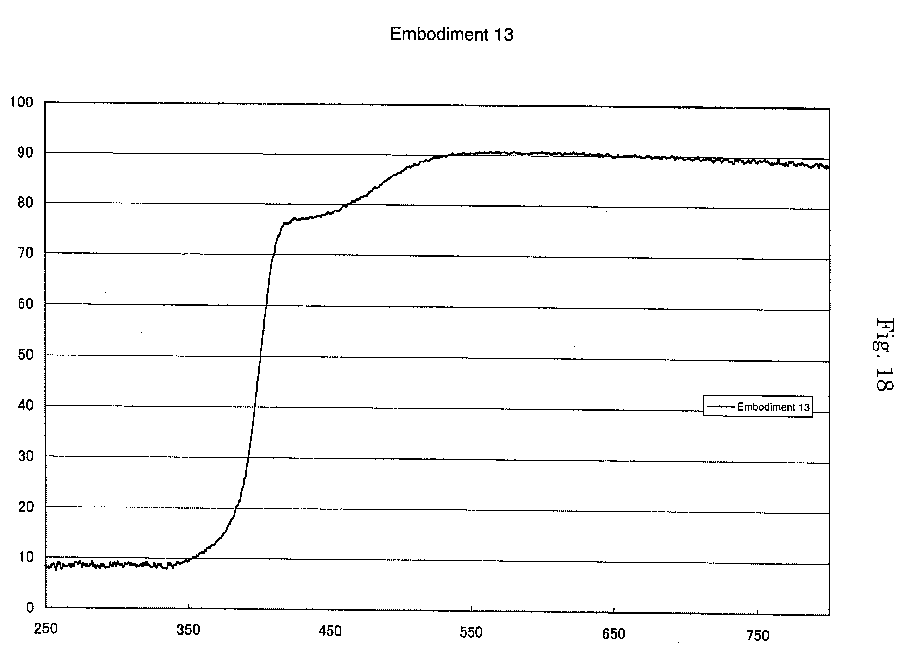

Fig. 18 shows the UV spectral measurement results for the sample of Embodiment 13.

Fig. 19 shows the NO elimination activity measurement results for the sample of Embodiment 13 and JRC-TIO-3 employed as starting material.

**Best Mode of Implementing the Invention**

The light-responsive material of the present invention is a light-responsive material in the form of rutile-type titanium oxide and having activity through the action of light from a light source with a peak wavelength of 520 nm and a half peak value of 20 nm. Here, the activity through the action of light can be, for example, a NO elimination activity. Further, the light-responsive material of the present invention may also be nitrogen element-containing rutile-type titanium oxide. In particular, the light-responsive material of the present invention in some cases has activity through the action of light from a light source with a peak wavelength of 630 nm and a full width at half maximum of 20 nm.

The activity of the light-responsive material of the present invention may be evaluated by measuring NOx oxidation activity (NO elimination activity), for example. The method of measuring NOx oxidation activity (NO elimination activity) will be described in detail in the embodiments. For example, monochromatic light, in which 300 W xenon lamp is used as a light source and the full width at half maximum is set to 20 nm by an illumination device made by JASCO Corporation, can be employed as a source. The peak wavelength of the monochromatic light can be set to, for example, 360 nm, 420 nm, 470 nm, 520 nm, 570 nm, and 630 nm.

The light-responsive material of the present invention in some cases has $NO_2$ generating activity due to the activity of light with a full width at half maximum of 20 nm at a peak light source wavelength of 570 nm.

Further, the light-responsive material of the present invention exhibits activity when irradiated with visible light. More specifically, it has NOx oxidation activity when irradiated with visible light of at least 400 to 550 nm, preferably 400 to 600 nm. Conventional rutile-type titanium oxide has some activity in visible light near 400 nm. For example, as indicated by the data in Table 6, the Catalyst Society Reference Catalyst JRC-TIO-3 (rutile) exhibits weak activity in a wavelength range of up to 470 nm, but exhibits no activity in a wavelength range exceeding 500 nm. As of the present, there is no known material based on rutile-type titanium oxide that exhibits photocatalytic activity under visible light in the wavelength range exceeding 500 nm and extending up to nearly 600 nm.

Adopting the NOx oxidation activity (NO elimination activity) achieved through the irradiation of light having a wavelength of 360 nm of the above-mentioned Catalyst Society Reference Catalyst JRC-TIO-3 (rutile) as a reference, the NOx oxidation activity (NO elimination activity) achieved through irradiation of light of a wavelength of 470 nm is about 10 percent, and no activity whatsoever is exhibited for light of a wavelength of 520 nm. By contrast, the light-responsive material of the present invention exhibits NOx oxidation activity (NO elimination activity) when the above-described monochromatic light within the range of at least 360-570 nm is employed, and in some cases, exhibits NOx oxidation activity (NO elimination activity) when monochromatic light with a wavelength of 630 nm is employed as light source.

More specifically, for example, adopting the NOx oxidation activity (NO elimination activity) achieved through the irradiation of light having a wavelength of 360 nm of one of the light-responsive materials of the present invention as a reference, the NOx oxidation activity (NO elimination activity) achieved through irradiation with light of a wavelength of 470 nm is about 80 percent, that achieved with light of a wavelength of 520 nm is about 50 percent, and that achieved with light of a wavelength of 570 nm is about 10 percent.

The light-responsive material of the present invention includes nitrogen element-containing rutile-type titanium oxide. The fact of containing nitrogen element can be confirmed by observing the Ti-N bond by X-ray photoelectron spectroscopy. The content of nitrogen element can be calculated from the peak area of the 1s electron of nitrogen bonded to titanium measured by X-ray photoelectron spectroscopy. The content of nitrogen element can be suitably selected to impart a visible light responsive property to the visible light-responsive material of the present invention.

For example, when the areas of (Ti2p3/2) and (Ti2p1/2) are taken as 100, the area of (N1s) can, for example, fall within the range of 0.01 to 10, or 0.1 to 5.

Further, the fact that the light-responsive material of the present invention is rutile-type titanium oxide can be confirmed by the fact that the titanium oxide employed as starting material is of the rutile-type, and by the XRD measurement of the light-responsive material of the present invention. This will be described in the embodiments.

Further, in the light-responsive material of a nitrogen element-containing mode of the present invention, titanium to oxygen plus nitrogen is nearly stoichiometric proportion. The fact that titanium to oxygen plus nitrogen is near stoichiometric proportion can be specified by the elementary ratio ((01s+N1s)/Ti2p) calculated from the area of the peak belonging to the 1s electron of oxygen bonded to titanium and the area of the peak belonging to the 1s electron of nitrogen bonded to titanium to the area of the peak belonging to the 2p electrons of titanium obtained by X-ray photoelectron spectroscopy, for example. In the light-responsive material of the present invention, the elemental ratio (O1s+N1s)/Ti2p calculated from the area is, for example, greater than or equal to 1.5 and less than or equal to 2.4. A more preferred elemental ratio (O1s + N1s)/Ti2p calculated from the area ranges from 1.75 to 2.20.

The light-responsive material of the present invention, for example, can be manufactured by a method comprising the treatment of starting material rutile-type titanium oxide with nitrogen plasma.

Alternatively, the light-responsive material of the present invention, for example, can be manufactured by a method comprising heat treatment of starting material rutile-type titanium oxide in an ammonia atmosphere.

The starting material rutile-type titanium oxide employed in the above-stated methods may be rutile-type titanium oxide manufactured by either a dry or wet method. The starting material rutile-type titanium oxide is desirably rutile-type titanium oxide of rather low crystallinity from the perspective of facilitating the manufacture of the light-responsive material of the present invention.

When employing the nitrogen plasma treatment method, the treatment with nitrogen plasma of rutile-type titanium oxide is desirably conducted in a treatment system where there is essentially no penetration of air.

The nitrogen plasma treatment can be conducted by irradiating rutile-type titanium oxide in a state of reduced pressure with electromagnetic waves such as microwaves or radio waves, introducing nitrogen gas to generate a nitrogen plasma, and exposing the rutile-type titanium oxide to the plasma for a prescribed period. The state of reduced pressure can be, for example, less than or equal to 10 Torr, or less than or equal to 2 Torr. The electromagnetic wave output can be suitably determined based on the quantity of rutile-type titanium oxide being treated and state of the plasma generated. The quantity of nitrogen gas introduced can be suitably determined based on the state of reduced pressure and the state of the plasma generated. The duration of exposure of the rutile-type titanium oxide to the nitrogen plasma is suitably determined in consideration of the quantity of nitrogen element introduced to the rutile-type titanium oxide and the light (particularly visible light) responsive property thereof.

The nitrogen plasma treatment method is desirably conducted in a state where there is essentially no penetration of air into the plasma treatment system. The phrase, "a state where there is essentially no penetration of air into the plasma treatment system" means a state requiring at least 10 minutes for the degree of vacuum of a sealed system to change 1 Torr. It has been considered that the less air that penetrates, the easier the introduction of nitrogen element into the rutile-type titanium oxide. Further, the above-mentioned nitrogen plasma may also comprise gases other than nitrogen as desired.

The method of heat treatment in an ammonia atmosphere is conducted in the manner stated below by heating starting material rutile-type titanium oxide in an ammonia gas flow to, for example, 750-850°C for 0.5 to 1.5 hours.

The above-described manufacturing of the material of the present invention can be conducted not only with powder and but also with a suitable binder, or without binder with the rutile-type titanium oxide immobilized on a substrate.

The light-responsive material of the present invention can also be manufactured by methods comprising the ion injection of nitrogen into rutile-type titanium oxide.

The rutile-type titanium oxide employed in the above-described methods may be rutile-type titanium oxide manufactured by a wet or dry method.

The methods and devices employed by the semiconductor industry may be employed in ion injection. The conditions employed in ion injection are suitably determined based on the quantity of nitrogen ions to be injected, the state of the rutile-type titanium oxide, and the like.

In the ion-injection method, not only powder and but also a suitable binder may be employed, or the rutile-type titanium oxide can be immobilized on a substrate without binder.

[Paint]

The paint of the present invention comprises at least the above-mentioned light responsive material, a binder, and a solvent. The binder may be either organic or inorganic.

Examples of inorganic binders are: alkyl silicate; products obtained by hydrolyzing hydrolysis silicon compounds such as halogenated silicon and its partially hydrolyzed substance; silica, colloidal silica, water-glass, organopolysiloxanes and other silicon compounds; polycondensation products of organic polysiloxane compounds; zinc phosphate, aluminum phosphate, and other phosphates; diphosphates; cement; calcium oxide; gypsum; frit for enamel; glost for glass lining; plaster; diatomaceous earth; and other inorganic binders. Examples of organic binders are fluoropolymers, silicon polymers, acrylic resin, epoxy resin, polyester resin, melamine resin, urethane resin, alkyd resin, and other organic binders. Since the binder is deteriorated and decomposed by the photocatalytic function of the photocatalyst, it is possible to suitably select the type of binder based on the location of use, degree of photocatalytic function, and application. However, since the above-mentioned light responsive material is employed as photocatalyst in the present invention, the deterioration due to photocatalytic function is substantially reduced relative to paints employing conventional ultraviolet radiation type photocatalysts. When employed in a room with almost no ultraviolet radiation, there is almost no deterioration due to the photocatalytic function. Accordingly, in paints employing ultraviolet radiation type photocatalysts, unusable organic binders such as acrylic resin, epoxy resin, polyester resin, melamine resin, urethane resin, and alkyd resin can be employed successfully.

These binders may be employed singly or in combinations of two or more in the present invention.

Examples of alkyl silicates are the compounds denoted by the general formula $Si_nO_{n-1}(OR)_{2n+2}$ (where Si

denotes silicon, O denotes oxygen, and R denotes an alkyl group). In the above, an example of n is 1-6 and an example of R is an alkyl group having 1-4 carbon atoms. However, the present invention is not limited thereto.

Examples of cements that are suitable for use are fast-setting cement, common cement, moderate-heat cement, sulfate-resistant cement, white cement, oil well cement, geothermal well cement, and other Portland cements; mixed cements such as fly ash cement, high-sulfate cement, silica cement, and furnace cement; and alumina cement.

Examples of plasters suitable for use are gypsum plaster, lime plaster, and dolomite plaster.

Examples of fluoropolymers are polyvinyl fluoride, polyvinylidene fluoride, polyethylene trifluorochloride, polyethylene tetrafluoride, polyethylene tetrafluoride-propylene hexafluoride copolymer, ethylene-polyethylene tetrafluoride copolymer, ethylene-ethylene trifluorochloride copolymer, ethylene tetrafluoride-perfluoroalkylvinyl ether copolymer, and other crystalline fluororesins; perfluorocyclopolymers, vinyl ether-fluoroolefin copolymers, vinyl ester-fluoroolefin copolymers, and other amorphous fluororesins; and various fluorine rubbers. Fluoropolymers comprising a chief component in the form of a vinyl ether-fluoroolefin copolymer or vinyl ester-fluoroolefin copolymer are employed with particular preference because they decompose or deteriorate little and are easy to handle.

Examples of silicon polymers suitable for use are straight-chain silicon resins, acrylic-modified silicon resins, and various silicon rubbers.

The organic polysiloxane compound employed in polycondensation products of an organic polysiloxane compound is a substance known to be a hydrolysis product of organic silicon compounds; those described in Japanese Unexamined Patent Publication (KOKAI) Heisei Nos. 8-164334, 8-67835, 8-155308, 10-66830, and Japanese Patent No. 2,756,474 may be employed without modification.

Organic polysiloxane compounds are the hydrolysis products of organic silicon compounds. Examples of organic silicon compounds are those having alkyl groups and alkoxy groups.

Products obtained by hydrolysis of organic silicon compounds having alkyl groups and alkoxy groups are also known, which can be obtained , for example, by hydrolyzing the organic silicon compound denoted by $R^1_n Si(OR^2)_{4-n}$. $R^1$ and $R^2$ each denote, for example, a lower alkyl group having 1-8 carbon atoms. In consideration of the film strength of the coating obtained, $R^1$ is a lower alkyl group having 1-3 carbon atoms, preferably a methyl group. In the above formula, n denotes an integer of 0-2; more particularly, the use of a hydrolysis product (three-dimensional crosslinked product) in the form of a mixture of organic silicon compounds in which n is 1 and 2 is desirable to achieve film strength and the like.

Examples of such organic silicon compounds are: methyltrimethoxysilane, methyltriethoxysilane, methyltriisopropoxysilane, methyltri-t-butoxysilane, methyltrichlorosilane, methyltribromosilane; ethyltrimethoxysilane, ethyltriethoxysilane, ethyltriisopropoxysilane, ethyltri-t-butoxysilane, ethyltrichlorosilane, ethyltribromosilane; n-propyltrimethoxysilane, n-propyltriethoxysilane, n-propyltriisopropoxysilane, n-propyltri-t-butoxysilane, n-propyltrichlorosilane, n-propyltribromosilane; n-hexyltrimethoxysilane, n-hexyltriethoxysilane, n-hexyltriisopropoxysilane, n-hexyltri-t-butoxysilane, n-hexyltrichlorosilane, n-hexyltribromosilane; n-decyltrimethoxysilane, n-decyltriethoxysilane, n-decyltriisopropoxysilane, n-decyltri-t-butoxysilane, n-decyltrichlorosilane, n-decyltribromosilane; n-octadecyltrimethoxysilane, n-octadecyltriethoxysilane, n-octadecyltriisopropoxysilane, n-octadecyltri-t-butoxysilane, n-octadecyltrichlorosilane, n-octadecyltribromosilane, tetramethoxysilane, tetraethoxysilane, tetrabutoxysilane, dimethoxydiethoxysilane; dimethyldimethoxysilane, dimethyldiethoxysilane, γ-glycidoxypropylmethyldimethoxysilane, γ-glycidoxypropylmethyldiethoxysilane, γ-glycidoxypropyltrimethoxysilane, γ-glycidoxypropyltriethoxysilane, γ-glycidoxypropyltriisopropoxysilane, and γ-glycidoxypropyltri-t-butoxysilane.

The blending proportion of binder converted into solid component is about 10-2,000 weight percent, preferably 25-1,000 weight percent, more preferably 25-500 weight percent, and still more preferably 25-250 weight percent of the light responsive material particles. Restricting the blending proportion of the binder to within the above-stated range makes it possible to maintain the function of the visible light responsive material without desorption of the light responsive material when forming a coating film of light responsive material.

Inorganic and organic solvents and mixtures thereof may be employed as solvent. Water is the inorganic solvent of preference. Examples of organic solvents suitable for use are methanol, ethanol, 2-propanol, ethylene glycol, other alcohols, and ketones. Alcohols are preferably incorporated from the viewpoints of ease of handling and coating properties. The blending proportion of the solvent can be suitably set based on operation properties.

As needed, at least one compound selected from the group consisting of dicarboxylic acids and derivatives thereof can be incorporated into the visible light responsive paint composition of the present invention. Dicarboxylic acids are organic compounds comprising two carboxyl groups, COOH, within the molecule. Examples suitable for use are oxalic acid, malonic acid, succinic acid, glutaric acid, adipic acid, pimelic acid, suberic acid, azelaic acid, sebacic acid, and other aliphatic saturated dicarboxylic acids; maleic acid, fumaric acid, and other aliphatic unsaturated dicarboxylic acids; and phthalic acid, isophthalic acid, terephthalic acid, and other aromatic dicarboxylic acids. Dicarboxylic acid derivatives are compounds obtained by changing a small portion of the dicarboxylic acid structure, such as esters of the above-listed dicarboxylic acids, salts of dicarboxylic acids, anhydrides of dicarboxylic acids, azides of dicarboxylic acids, amides of dicarboxylic acids, and imides of dicarboxylic acids. Examples are methyl dicarboxylate, ethyl dicarboxylate, propyl dicarboxylate, butyl dicarboxylate, sodium dicarboxylate, and ammonium dicarboxylate. Commercial products containing dicarboxylic acid or a derivative thereof, for example, the product known as Rodiasolve (made by Rhone-Poulenc Japan Co.), which is a blend of three dicarboxylic esters, may be employed.

The content of dicarboxylic acid and derivatives thereof is about 0.5-500 weight percent, preferably 5-500 weight percent, more preferably 10-500 weight percent, and still more preferably 25-250 weight percent, of the visible light responsive material particles in the visible light responsive paint composition. When the content of dicarboxylic acid and derivatives thereof falls below the above-stated range, an addition effect is difficult to achieve, and when the content exceeds the above-stated range, a marked effect is difficult to achieve no matter how great the subsequent increase. A visible light responsive material film prepared with a visible light responsive paint composition comprising dicarboxylic acid or a derivative thereof is porous and affords improvement in the function of the visible light responsive material. Further, in addition to at least one compound selected from the group consisting of dicarboxylic acids and derivatives thereof; visible light responsive material particles; binder; and solvent, the visible light responsive paint composition of the present invention may also comprise additives in the form of various dispersants, surfactants, curing agents, and crosslinking agents.

The present invention relates to articles on which a visible light responsive material coating films are formed using the visible light responsive paint composition set forth above. Articles suitable for use are ceramics, glass, and other inorganic substance articles; plastic, rubber, wood, paper, and other organic substance articles; metals such as aluminum; and metallic material articles of alloys such as steel. The size and shape of the article are not specifically limited. The film thickness of the visible light responsive material coating film formed on the article may be suitably set based on the application. Examples of possible film thicknesses are about 0.01-100 μm. The visible light responsive material film can be formed on the article by coating or spraying on the article the visible light responsive paint composition of the present invention. Specifically, it is preferable that a paint composition is prepared by dispersing the visible light responsive material particles and binder in a solvent, after which the paint composition is coated or sprayed onto a base member, with the visible light responsive material particles and the binder being present on at least a portion of the base member. Examples of the above-mentioned solvent are water, toluene, alcohol, and other organic solvents. Examples of coating methods are immersion, dip coating, spiner coating, blade coating, roller coating, wire bar coating, reverse roll coating, brush coating, sponge coating and other commonly employed coating methods; or spraying can be done by the usual method such as spray coating. After coating or spraying in this manner, the solvent is removed by drying or sintering. The drying or sintering temperature is desirably lower than 500°C, with a temperature of room temperature to 400°C being preferred. A temperature exceeding 500°C is undesirable because the function of the visible light responsive material decreases. As needed, a method such as irradiation with ultraviolet radiation may be employed to solidify the binder employed. As needed, prior to coating or spraying the visible light responsive paint composition onto the article, the above-mentioned organic binder such as acrylic resin, epoxy resin, polyester resin, melamine resin, urethane resin, alkyd resin or the like or the above-described inorganic binder may be precoated or presprayed onto the article as a primer or coating.

The paint and coating film of the present invention may also comprise a granular substance, adsorption agent, and/or carrier. Examples of granular substances are inorganic and organic particles having a mean particle diameter of 1 nm to 100 μm. In the present invention, adhering the visible light responsive material particles and adsorption agent and/or carrier to the base member through a binder is desirable in that the substance being processed is imparted with both adsorption and/or carrier actions. Common adsorption agents and carriers may be employed as the adsorption agent and carrier mentioned above. Examples are activated charcoal, zeolite, and silica gel.

In addition to the above-described components, colloidal oxides may also be incorporated into the paint and coating film of the present invention. An example of a colloidal oxide is colloidal silica. Since colloidal oxides increase the surface area of the coating (rendering it porous) due to their fine particles, it is possible to increase the contact frequency between visible light response materials and substances being reacted with.

In the present invention, a first layer comprised of binder not containing the visible light responsive material particles is provided on a base member, and over the first layer, provided is a second layer comprised of binder and the visible light responsive material particles. Providing a first layer not comprising visible light responsive material particles makes it possible to adhere more firmly and for an extended period of time the visible light responsive material particles to the base member. An organic binder is preferred as such a binder. The incorporation into the first layer of a filler in the form of inorganic particles not having a visible light responsive material function is desirable. Titanium oxide, silicon oxide, aluminum oxide, and magnesium oxide surface treated with silicon oxide, aluminum oxide, zirconium oxide or the like so as not to have a visible light responsive material function, can be employed as such inorganic particles.

In the present invention, the quantity of visible light responsive material particles in the paint composition is 5-98 percent, preferably 20-98 percent, more preferably 50-98 percent, and still more preferably, 70-98 percent based on volume relative to the total amount of the visible light responsive material particles and binder. Crosslinking agents, dispersants, fillers, and the like may be blended into the paint composition. The usual crosslinking agents, such as isocyanates and melamines, may be employed as the crosslinking agents. Coupling agents may be employed as the dispersants. In particular, when the content of the visible light responsive material particles in the paint composition based on volume relative to the total quantity of the visible light responsive material particles and binder is 40-98 percent, a coupling agent is desirably blended into the paint composition. The quantity of this coupling agent that is added is desirably 5-50 percent, more preferably 7-30 percent.

The visible light responsive material coating film of the present invention is obtained by coating or spraying as mentioned above, followed by solidification. Solidification can be conducted by drying, irradiation with ultraviolet radiation, heating, cooling, or employing crosslinking agents. Solidification is conducted at a temperature lower than 400°C, preferably a temperature of room temperature to 200°C. In this case, a temperature higher than 400 °C is not desirable because the binder deteriorates due to heat and the visible light responsive material particles tend to desorb. In the present invention, the preferred method of solidification is the use of a crosslinking agent such as an isocyanate or a melamine.

The present invention relates to articles having the above-mentioned coating film of the present invention on at least a portion of a base material surface. Base materials suitable for use include the outer wall surfaces of buildings, external roof surfaces, external window glass surfaces, internal window glass surfaces, room wall surfaces, floor surfaces, ceiling surfaces, blinds, curtains, protective walls along roads, interior tunnel walls, the exterior surfaces and reflective surfaces of lights, the interior surfaces of vehicles, and mirror surfaces.

The use of a coating film comprising the light responsive material of the present invention or an article having this coating film affords a method of sterilizing and/or preventing stain. The use of the visible light responsive type material of the present invention provides a method of clarifying water and a method of clarifying nitrogen oxides.

The coating film comprising the visible light-responsive material of the present invention can be used to decompose for clarifying harmful substances, foul-smelling substances, oils, and the like present around it, and sterilize by irradiation with visible light. An example of the light that is irradiated is light comprising visible light. Examples are the light generated by light-emitting diodes, organic electroluminescent material, sunlight, fluorescent light, and light generated by halogen lamps, xenon flash lamps, and mercury lamps. In particular, light comprising visible light of 400 to 700 nm is preferred. The level of irradiation with light, the irradiation period, and the like may be suitably determined based on the quantity of material to be treated and the like.

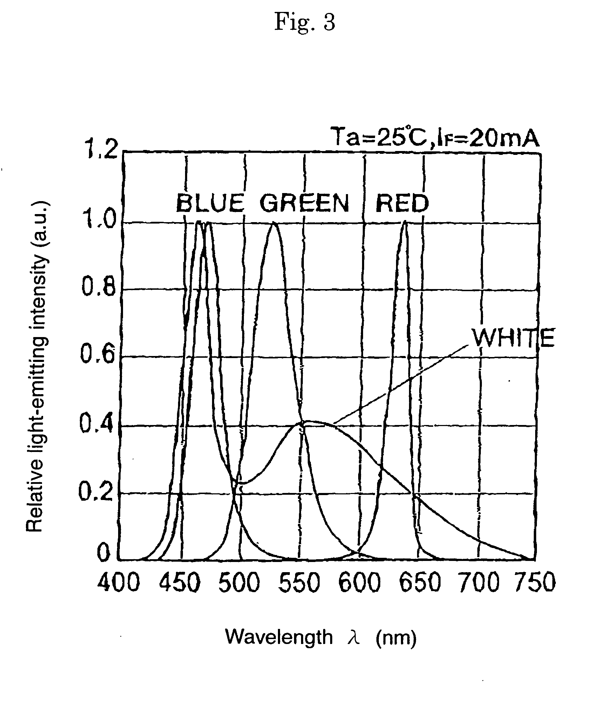

The light-emitting diodes employed in the method of the present invention either have light-emission wavelength within at least a visible light range or within only a visible light range. Examples of such light-emitting diodes are purple light-emitting diodes, blue light-emitting diodes, green light-emitting diodes, yellow light-emitting diodes, and white light-emitting diodes. Purple light-emitting diodes have light emission wavelengths from the ultraviolet range to the visible light range. Further, blue light-emitting diodes, green light-emitting diodes, yellow light-emitting diodes, and white light-emitting diodes have light emission wavelengths only in the visible light range. The emission spectra of blue light-emitting diodes (BLUE), green light-emitting diodes (GREEN), and white light-emitting diodes (WHITE) are shown in Fig. 3.

A light-responsive material that has been activated by an activation method of the light-responsive material of the present invention may be employed in chemical reaction methods, environmental clarification methods, sterilizing methods, stain-preventing methods, and the like.

The present invention relates to a device having a layer comprising a light-responsive photocatalyst on a light-emitting diode substrate. The light-emitting diode substrate comprises at least, for example, a light-emitting diode and a light-passing layer provided thereover, and it may be provided with a layer comprising the above-described visible light-responsive material over the light-passing layer.

The present invention further relates to devices comprising a light-emitting diode, a visible light-responsive material, and a means of transferring light from a light-emitting diode to the visible light-responsive material. Here, an example of a means of transferring light is optical fiber.

The layer comprising the above-described visible light-responsive material can be formed, for example, by applying the above-described light-responsive material in powder form to a substrate such as a light-passing layer provided on a light-emitting diode. Alternatively, rutile-type titanium oxide can be coated along with a suitable binder as required onto a substrate and nitrogen plasma treatment employed to form a layer comprising the light-responsive material of the present invention.

The above-described light-responsive material may be employed to provide methods of sterilizing, preventing algae, preventing mildew and/or preventing stain. Further, the above-mentioned light-responsive material may be employed to provide methods of clarifying water and reducing nitrogen oxides in air.

The present invention includes methods in which the light-responsive material of the present invention is irradiated with light with at least a portion of wavelength within the visible light range, preferably light with a wavelength of at least 400 to 600 nm, and then brought into contact with water to photo-decompose water.

**Embodiments**

Embodiment of the present invention will be described below.
However, the present invention is not limited thereto.

Embodiment 1

A 10 g quantity of Catalyst Society Reference Catalyst JRC-TIO-3 (rutile) was charged to a 400 mL quartz reaction tube. The quartz reaction tube was connected to a plasma generator, the system was evacuated with a vacuum pump, and $N_2$ gas (flow rate 100 sccm) was introduced into the system to a pressure of about 1 Torr. The titanium dioxide powder in the reaction tube was irradiated with 1,200 W electromagnetic waves (2.45 GHz) to generate a plasma. The rutile-type titanium dioxide powder in the reaction tube was treated for 5 min with stirring to obtain the light-responsive material of the present invention.
The plasma treatment system required 40 min for the degree of vacuum to increase by 1 Torr in a state cut off from pump evacuation of air without the introduction of gas.

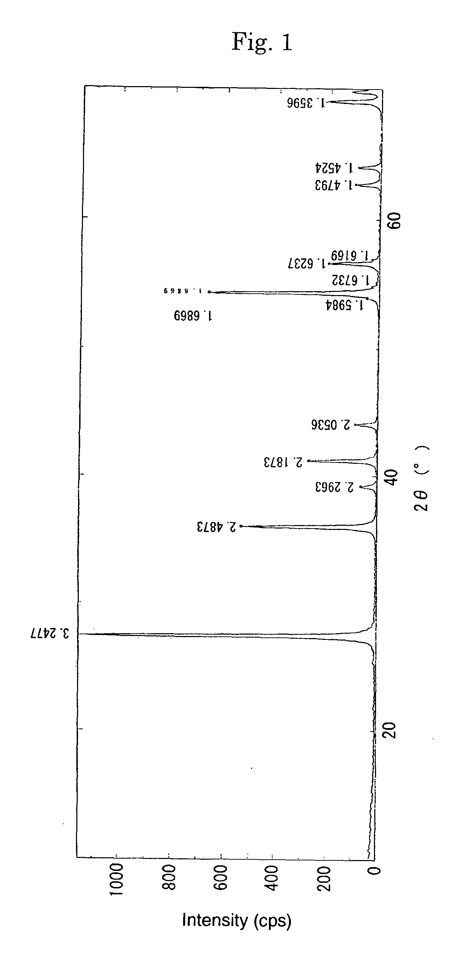

Fig. 1 gives an XRD of the sample obtained. The results of XPS measurement of the sample obtained are given below. In XPS measurement, an X-ray photoelectron spectroscope (ESCA Model 750 made by Shimadzu Corporation) was employed.
X-ray photoelectron spectroscopy (XPS) was employed to determine the areas of the peaks belonging to the 2p electrons of titanium (458.9 eV (Ti2p3/2)) and (464.3 eV (Ti2p1/2)), the area of the peak belonging to the 1s electron of oxygen bonded to titanium (530.0 eV (O1s)), and the area of the peak belonging to the 1s electron of nitrogen (393.5 eV (N1s)) in the rutile-type titanium oxide powder obtained. The elemental ratio ((O1 + N1s)/Ti2p) calculated from the areas obtained was 1.98. However, the areas of 458.9 eV (Ti2p3/2) and 464.3 eV (Ti2p1/2 were 12,411 cps ·eV. The area of 530.0 eV (O1s) was 24,462 cps ·eV. And the area of 393.5 eV (N1s) was 273 cps ·eV.
X-ray photoelectron spectroscopic (XPS) measurement was also conducted for rutile titanium oxide powder (Catalyst Society Reference Catalyst JRC-TIO-3 (rutile)) that had not been plasma treated. As a result, peaks belonging to the 1s electron of nitrogen were not observed. Further, the elemental ratio (O1s/Ti2p calculated from the areas of the peaks (458.9 eV (Ti2p3/2) and 464.5 eV (Ti2p 1/2)) belonging to the 2p electrons of titanium and the area of the peak (529.8 eV (O1s)) belonging to the 1s electron of oxygen bonded to titanium was 1.99.

Embodiment 2

A 10 g quantity of Catalyst Society Reference Catalyst JRC-TIO-3 (rutile) was charged to a 400 mL quartz reaction tube. The quartz reaction tube was connected to a plasma generator, the system was evacuated with a vacuum pump, and $N_2$ gas (flow rate 100 sccm) was introduced into the system to a pressure of about 1 Torr. The titanium dioxide powder in the reaction tube was irradiated with 600 W electromagnetic waves (2.45 GHz) to generate a plasma. The rutile-type titanium dioxide powder in the reaction tube was treated for 10 min with stirring, left standing for 10 min, and then plasma treated for 20 min to obtain the light-responsive material of the present invention.
The plasma treatment system required 40 min for the degree of vacuum to increase by 1 Torr in a state cut off from pump evacuation of air without the introduction of gas.

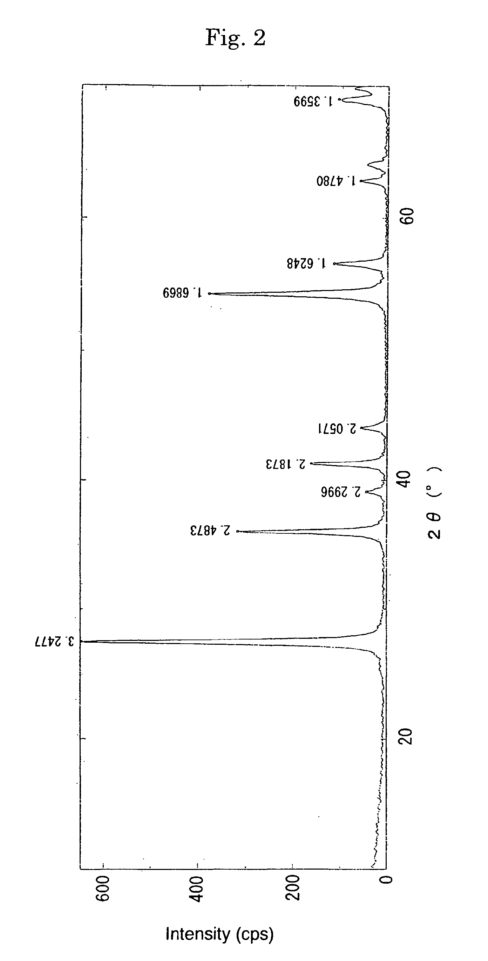

Fig. 2 shows an XRD of the sample obtained. The results of XPS measurement of the sample obtained are given below.
X-ray photoelectron spectroscopy (XPS) was employed to determine the areas of the peaks belonging to the 2p electrons of titanium (459.2 eV (Ti2p3/2)) and (464.7 eV (Ti2p1/2)), the area of the peak belonging to the 1s electron of oxygen bonded to titanium (530.1 eV (O1s)), and the area of the peak belonging to the 1s electron of nitrogen (394.8 eV (N1s)) in the rutile-type titanium oxide powder obtained. The elemental ratio ((O1 + N1s)/Ti2p) calculated from the areas obtained was 1.97.
However, the areas of 459.2 eV (Ti2p3/2) and 464.7 eV (Ti2p1/2) were 14,565 cps ·eV. The area of 530.1 eV (O1s) was 28,430 cps ·eV. And the area of 394.8 eV (N1s) was 102 cps ·eV.
Further, the elemental ratio (O1s/Ti2p calculated from the areas for rutile-type titanium oxide powder that had not been treated with plasma was 1.99, as stated in Embodiment1.

Test Example 1

Methylene Blue Color Elimination Test

A 0.2 g quantity of the powders manufactured in Embodiments 1 and 2 was uniformly applied to plate glass (6 x 6 cm) with water and dried at ordinary temperature. A roughly 2 mL quantity of a 0.05 weight percent methylene blue aqueous solution was applied dropwise near the center of the plate glass and dried at ordinary temperature. The light source was positioned facing the sample at a distance of 1 cm. A total of four blue LEDs (model number NSSB450, made by Nichia Corporation) arranged two by two in a checkerboard configuration measuring 1.5 cm on a side were employed as light source, with each light-emitting diode being lit up by the application of 3.7V voltage. The sample was irradiated with light for 1 hour. Table 1 shows the change in color of the portion irradiated of the samples following irradiation with light.

Comparative Example 1

With the exception that commercial ultrafine granular titanium oxide powder ST-01 (anatase-type titanium oxide, made by Ishihara Sangyo) was employed in place of the powders manufactured in Embodiments 1 and 2, the methylene blue color elimination test was conducted in the same manner as in Embodiment 1. The results are given in Table 1.

Comparative Example 2

With the exception that commercial ultrafine granular titanium oxide powder P-25 (mixed crystals of rutile-type titanium oxide and anatase-type titanium oxide, manufactured by Degusa) was employed in place of the powders manufactured in Embodiment 1 and 2, the methylene blue color elimination test was conducted in the same manner as in Embodiment 1. The results are given in Table 1.

Table 1

|  | Color change |
| --- | --- |
| Embodiment 1 | Color was completely eliminated. |
| Embodiment 2 | Color was completely eliminated. |
| Comp. Ex.1 | Color elimination was not observed, but color was slightly turned to purple. |
| Comp. Ex.2 | Color elimination was not observed, but color was slightly turned to purple. |

Test Example 2 (Green light-emitting diode)

A 0.2 g quantity of the powders manufactured in Embodiments 1 and 2 was uniformly applied to plate glass (6 x 6 cm) with water and dried at ordinary temperature. A roughly 2 mL quantity of a 0.05 weight percent methylene blue aqueous solution was applied dropwise near the center of the plate glass, and dried at ordinary temperature. The light source was positioned facing the sample at a distance of 1 cm. Portions where coloration of methylene blue was observed were irradiated with light. A total of four green LEDs (model number NSSG450, made by Nichia Corporation) arranged two by two in a checkerboard configuration measuring 1.5 cm on a side were employed as light source, with each light-emitting diode being lit up by the application of 3.7V voltage. The sample was irradiated with light for 1 hour. Table 2 shows the change in color of the portion irradiated of the samples following irradiation with light.

Comparative Example 3

With the exception that commercial ultrafine granular titanium oxide powder ST-01 (anatase-type titanium oxide, made by Ishihara Sangyo) was employed in place of the powders manufactured in Embodiments 1 and 2, the methylene blue color elimination test was conducted in the same manner as in Embodiment 2. The results are given in Table 1.

Comparative Example 4

With the exception that commercial ultrafine granular titanium oxide powder P-25 (mixed crystals of rutile-type titanium oxide and anatase-type titanium oxide, manufactured by Degusa) was employed in place of the powders manufactured in Embodiment 1 and 2, the methylene blue color elimination test was conducted in the same manner as in Embodiment 2. The results are given in Table 2.

Table 2

|  | Color change |
|---|---|
| Embodiment 1 | Color was completely eliminated. |
| Embodiment 2 | Color was completely eliminated. |
| Comp. Ex.3 | Color elimination was not observed, but color was slightly turned to purple. |
| Comp. Ex.4 | Color elimination was not observed, but color was slightly turned to purple. |

Test Example 3

Oxidation of Isopropanol with a Blue Light-Emitting Diode

A 0.2 g quantity of the sample (visible light-responsive material) prepared in Embodiment 2 was suspended in water and applied to a glass plate (5 x 5 cm x 2 mm) and placed in a two-liter bell jar reactor. This was then positioned at a prescribed position 7 cm from the light source. A total of nine blue LEDs (model number NSPB500S, made by Nichia Corporation) arranged three by three in a square checkerboard configuration measuring 1.5 cm on a side and facing the sample were employed as light source., with each light-emitting diode being lit up by the application of 3 V voltage. The illuminance was 2,500 lx at the position of the sample.

In the reaction, isopropanol was introduced so that the interior of the reaction system is 540 ppm (quantity of isopropanol introduced: 543 ppm). Air atmosphere at a pressure of 1 atm and a humidity of 30 percent was employed in the reaction system.

After reaching equilibrium, illumination with light was commenced. The concentrations of isopropanol, acetone, and carbon dioxide in the reaction system were measured by FID and TCD from samples collected from the reaction system by syringe. The results of reaction after irradiation with light are given in the table below.

Table 3

| Light irradiation time (min) | Isopropanol (ppm) | Acetone (ppm) | $CO_2$ (ppm) |
|---|---|---|---|
| 0 | 18 | 0 | 0 |
| 500 | 6 | 98 | 0 |
| 2000 | 0 | 135 | 122 |
| 4000 | 0 | 85 | 305 |

Test Example 4 (Wavelength dependency of NOx elimination activity)

Two grams each of the samples prepared in Embodiments 1 and 2 and Catalyst Society Reference Catalyst JRC-TIO-3 (rutile) (Comparative Example 5) were coated on glass plates (6 x 6 cm) and the glass plates were positioned within a Pyrex glass reactor (inner diameter 160 mm, thickness 25 mm). Monochromatic light with a full width at half maximum of 20 nm was irradiated with an illumination device (product name: SM-5 model CT-10, made by JASCO Corporation) employing a 300 W xenon lamp as the light source.

To the reactor, 0 percent RH simulation polluted air (NO: 1 ppm) was continuously fed at a flow rate of 1.5 L/min and the changes in concentration of NO and $NO_2$ were monitored at the reactor outlet. The concentration of NO was measured by chemiluminescence using ozone. The $NO_x$ elimination rate (%) (= NO reduction rate - $NO_2$ generation rate) was calculated for each measurement wavelength from the cumulative values monitored over 1 hour. A Nitrogen Oxides Analyzer Model 8840 made by Monitor Labs, Inc. was employed for the measurement of the NO concentration.

The results are given in the table below.

Table 4

| (Embodiment 1) | | | |
|---|---|---|---|
| Wavelength (nm) | NO reduction rate (%) | $NO_2$ generation rate (%) | NOx reduction rate (%) |
| 630 | 0.0 | 0.0 | 0.0 |
| 570 | 2.4 | 0.0 | 2.4 |

**EP 1 393 803 A1**

Table 4   (continued)

| (Embodiment 1) | | | |
|---|---|---|---|
| Wavelength (nm) | NO reduction rate (%) | NO$_2$ generation rate (%) | NOx reduction rate (%) |
| 520 | 13.0 | 2.7 | 10.3 |
| 470 | 19.9 | 7.0 | 12.9 |
| 420 | 20.2 | 8.1 | 12.1 |
| 360 | 22.8 | 8.8 | 14.0 |

Table 5

| (embodiment 2) | | | |
|---|---|---|---|
| Wavelength (nm) | NO reduction rate (%) | NO$_2$ generation rate (%) | NOx reduction rate (%) |
| 630 | 1.6 | 0.0 | 1.6 |
| 570 | 2.8 | 0.4 | 2.4 |
| 520 | 12.4 | 3.8 | 8.6 |
| 470 | 19.6 | 8.0 | 11.6 |
| 420 | 20.1 | 8.2 | 11.9 |
| 360 | 23.9 | 8.5 | 15.4 |

Table 6

| (Comparative Example 5) | | | |
|---|---|---|---|
| Wavelength (nm) | NO reduction rate (%) | NO$_2$ generation rate (%) | NOx reduction rate (%) |
| 630 | 0.0 | 0.0 | 0.0 |
| 570 | 0.0 | 0.0 | 0.0 |
| 520 | 0.0 | 0.0 | 0.0 |
| 470 | 2.7 | 0.0 | 2.7 |
| 420 | 16.6 | 6.6 | 9.9 |
| 360 | 22.9 | 6.0 | 16.8 |

Test Example 5

The NO$_x$ elimination activity test was conducted with three types of LED having differing light emission wavelengths.

Glass plates (6 x 6 cm) coated with 0.2 g of the sample produced in Embodiment 2 were placed in a Pyrex glass reactor (inner diameter 160 mm, thickness 25 mm). The light source and samples were positioned at a distance of 4 cm from each other.

The light sources were as follows:

Green LED: Model E1S03-AG, made by Toyoda Gosei Co., Ltd.
Blue LED: Model E1S02-4B0A7, made by Toyoda Gosei Co., Ltd.
White LED: Model NSCW-100, made by Nichia Corporation

In all cases, a total of 24 LEDs were embedded with a vertical and horizontal spacing of 1 cm on a 4 x 4 cm square substrate, except for in the center. Taking the quantity of light of this light source as 100 percent, light sources with light quantities of 50 percent and 25 percent were prepared. In the light source with 50 percent light quantity, a total of 12 LEDs were arranged to light up in four corners in a manner not adjacent to their neighbors. In the light source with 25 percent light quantity, six LEDs were arranged with four on the corners and two on the diagonals of a square. The power consumed was calculated as the voltage applied to each LED multiplied by the total current (with the current per LED being the total current divided by the number of LEDs).

To the reactor, 0 percent RH simulation polluted air (NO: 1 ppm) was continuously fed at a flow rate of 1.5 L/min and the changes in concentration of NO and $NO_2$ were monitored at the reactor outlet. The concentration of NO was measured by chemiluminescence using ozone. The $NO_x$ elimination rate (%) (=NO reduction rate - $NO_2$ generation rate) for each light illumination condition was calculated from the cumulative values monitored over 1 hour. A Nitrogen Oxides Analyzer Model 8840 made by Monitor Labs, Inc. was employed for the NO concentration measurement.

Table 6 gives the NOx elimination rates obtained with light sources in the form of six of the above LEDs at a total current level of 0.2 A. For comparison, an example where commercial ultrafine granular titanium oxide powder (ST-01, made by Ishihara Sangyo) was employed in place of the powder prepared in Embodiment 2 was made to Comparative Example 1 and an example where commercial ultrafine granular titanium oxide powder P-25 (made by Degusa) was employed was made to Comparative Example 2.

Table 7

| Type of LED | Embodiment 1 | Comp.Ex.1 | Comp.Ex.2 | Power consumed |
|---|---|---|---|---|
| Green LED | 5.9% | 0% | 0% | 0.62 W |
| Blue LED | 8.4% | 2.2% | 2.2% | 0.62 W |
| White LED | 7.9% | 2.5% | 2.6% | 0.62 W |

From the results in Table 7, it is understood that, by the material of the present invention, nitrogen oxides can be oxidized and eliminated by the visible light-containing light with a light source in the form of LED. In particular, when green LEDs having a light emission peak at 500 to 550 nm were employed, the material of the present invention was found to effectively oxidize and eliminate nitrogen oxides.

Embodiment 3

A mixture of the composition indicated below containing the light-responsive material obtained in Embodiment 2 was thoroughly mixed and dispersed by shaking for 1 hour in a paint shaker to obtain a paint composition.

| | |
|---|---|
| Light-responsive material | 9.8 g |
| Vinyl acetate - acrylic copolymer | 0.7 g |
| (Boncoat 6290, made by Dainippon Ink and Chemicals Incorporated.) | |
| Water | 24.8 mL |

The above paint composition was applied to a 20 $cm^2$ glass plate and dried for 10 min at 120°C, yielding a visible light-responsive coating film (Sample A). The content of light-responsive material in Sample A was 90 percent based on the volume relative to the combined quantity of the light-responsive material and binder.

Embodiment 4

A mixture of the composition indicated below containing the light-responsive material obtained in Embodiment 2 was thoroughly mixed and dispersed by shaking for 3 hours in a paint shaker to obtain a paint composition. The Lumiflon LF200C listed below is a fluoropolymer having a principal component in the form of a copolymer of vinyl ether and fluoroolefin.

| | |
|---|---|
| Light-responsive material: | 9.80 g |
| Fluoropolymer: | 0.80 g |
| (Lumiflon LF200C, made by Asahi Glass Company.) | |
| Isocyanate curing agent | 0.16 g |
| Titanium coupling agent | 1.00 g |
| (Plain Act 338X, made by Ajinomoto Co., Inc.) | |
| Toluene | 23.60 mL |

The above paint composition was applied to a 20 cm$^2$ glass plate and dried for 20 min at 120°C, yielding the visible light-responsive coating film of the present invention (Sample B). The content of light-responsive material in Sample B was 90 percent based on the volume relative to the combined quantity of the light-responsive material and binder.

Embodiment 5

A mixture of the composition indicated below containing the light-responsive material obtained in Embodiment 2 was thoroughly mixed and dispersed by shaking for 3 hours in a paint shaker to obtain a paint composition.

| | |
|---|---|
| Light-responsive material: | 7.64 g |
| Fluoropolymer: | 2.36 g |
| (Lumiflon LF200C, made by Asahi Glass Company.) | |
| Isocyanate curing agent | 0.47 g |
| Titanium coupling agent | 0.76 g |
| (Plain Act 338X, made by Ajinomoto Co., Inc.) | |
| Toluene | 22.50 mL |

The above paint composition was applied to a 20 cm$^2$ glass plate and dried for 20 min at 120°C, yielding the visible light-responsive coating film of the present invention (Sample C). The content of light-responsive material in Sample C was 70 percent based on the volume relative to the combined quantities of light-responsive material and binder.

Embodiment 6

A mixture of the composition indicated below containing the light-responsive material obtained in Embodiment 2 was thoroughly mixed and dispersed by shaking for 1 hour in a paint shaker to obtain a paint composition.

| | |
|---|---|
| Light-responsive material: | 9.8 g |
| Polyorganosiloxane inorganic binder | 2.7 g |
| (3:1 mixed product of T2202A and T2202B made by JSR Corporation) | |
| Isopropyl alcohol | 21.5 mL |

The above paint composition was applied to a 20 cm$^2$ glass plate and dried for 10 min at 180°C, yielding the visible light-responsive coating film of the present invention (Sample D). The content of light-responsive material in Sample D was 90 percent based on the volume relative to the combined quantities of light-responsive material and binder.

Test Example 6

Oxidation Activity of NO

Samples A to D prepared in Embodiment 3 to 6 were placed in a Pyrex glass reactor (internal diameter 160 mm, thickness 25 mm). Monochromatic light with a full width at half maximum of 20 nm was irradiated with an illumination device made by JASCO Corporation employing a 300 W xenon lamp as the light source.

To the reactor, 0 percent RH simulation polluted air (NO: 1 ppm) was continuously fed at a flow rate of 1.5 L/min and the change in concentration of NO was monitored at the reactor outlet. The concentration of NO was measured by chemiluminescence using ozone. The $NO_x$ elimination rate was calculated from the cumulative values monitored over 1 hour.

The table below gives the NO elimination concentration (%) of each sample at 470 nm.

Table 8

| | No elimination concentration (%) at 470nm | Binder |
|---|---|---|
| Embodiment 3 | 8.0 | Acryl-based |

Table 8   (continued)

|  | No elimination concentration (%) at 470nm | Binder |
|---|---|---|
| Embodiment 4 | 3.0 | Fluorine-based |
| Embodiment 5 | 3.3 | Fluorine-based |
| Embodiment 6 | 6.1 | Silicate |

Test Example 7

The "Optical Film Adhesion Methods" of the Nippon Food Center, Inc. of a foundation were referenced and a test was conducted to observe the antibacterial performance of the coating film comprising the light-responsive material obtained in Embodiment 2.
A test of the antibacterial strength of samples was conducted by referencing the "Test Methods for Evaluating the Antibacterial Strength of Antibacterial Products III (1998 revised edition)" of the Antibacterial Product Technology Association.
The conditions were as follows:

Staphylococcus: *Staphylococcus aureus* IFO 12732
Bacterial preparation solution: 1/500 NB medium (diluted with phosphate buffer solution)
Light irradiation conditions: 6,000 lx (white fluorescent lamp)

In the coating film sample, an alkoxysilane binder (made by Okitsumo K.K.) was employed. This binder was prepared by hydrolysis of a mixture of 100 weight parts of methyltrimethoxysilane and 100 weight parts of colloidal silica solution dispersed with water (solid component 30 percent). 100g of the binder and 50 g of the sample of Embodiment 2 were mixed and 50 g of isopropyl alcohol were added to the mixture obtained to prepare a paint. The paint thus prepared was applied by brush to a glass plate (5 x 5 cm) and dried, followed by baking for 2 hours at 180°C to prepare a coating film sample.
The bacterial preparation solution containing the above-stated *Staphylococcus aureus was* applied to yield a live bacteria count of about $3 \times 10^5$ on the coating film sample obtained. The sample was then irradiated for 24 hours at 25°C with white fluorescent light and the live bacteria number was counted by the usual method.
A polyethylene film and a glass plate not having a coating film were employed as a control.
The results are given in the following table.

## Table 9

| 24hours after light radiation at 25℃ | Sample | Sample 1 | Sample 2 | Average of the two samples |
|---|---|---|---|---|
|  | Reference | $1.8 \times 10^4$ | $7.4 \times 10^4$ | $4.6 \times 10^4$ |
|  | Only glass | $1.1 \times 10^5$ | $1.6 \times 10^5$ | $1.35 \times 10^5$ |
|  | Coating film sample | 10 or less | 10 or less | 10 or less |

Embodiment 7

A 10 g quantity of Catalyst Society Reference Catalyst JRC-TIO-3 (rutile) was charged to a 400 mL quartz reaction tube. The quartz reaction tube was connected to a plasma generator, the interior of the system was evacuated with a vacuum pump, and $N_2$ gas (flow rate: 100 sccm) was introduced to the inner pressure of the system to about 1 Torr. While stirring, the titanium dioxide powder in the reaction tube was exposed to 600 W of electromagnetic waves (2.45 GHz) for 10 min to obtain the light-responsive material of the present invention.

The plasma treatment system required 40 min for the degree of vacuum to increase by 1 Torr in a state cut off from pump evacuation of air without the introduction of gas.

Embodiment 8

A 10 g quantity of Catalyst Society Reference Catalyst JRC-TIO-3 (rutile) was charged to a 400 mL quartz reaction tube. The quartz reaction tube was connected to a plasma generator, the interior of the system was evacuated with a vacuum pump, and $N_2$ gas (flow rate: 100 sccm) was introduced to the inner pressure of the system to about 1 Torr. While stirring, the titanium dioxide powder in the reaction tube was exposed to 600 W of electromagnetic waves (2.45 GHz) for 10 min, left standing for 10 min, and then plasma treated for 10 min to obtain the light-responsive material of the present invention. Table 10 below gives the measurement results by X-ray photoelectron spectroscopy (XPS) of the light-responsive material (rutile-type titanium oxide powder) obtained.

Embodiment 9

A 10 g quantity of Catalyst Society Reference Catalyst JRC-TIO-3 (rutile) was charged to a 400 mL quartz reaction tube. The quartz reaction tube was connected to a plasma generator, the interior of the system was evacuated with a vacuum pump, and $N_2$ gas (flow rate: 100 sccm) was introduced to the inner pressure of the system to about 1 Torr. While stirring, the titanium dioxide powder in the reaction tube was exposed to 600 W of electromagnetic waves (2.45 GHz) for 10 min, left standing for 10 min, and then plasma treated for 10 min, with this cycle being conducted three times to obtain the light-responsive material of the present invention. Table 10 below gives the measurement results by X-ray photoelectron spectroscopy (XPS) of the light-responsive material (obtained by four ten-minute cycles of plasma treatment) (rutile-type titanium oxide powder).

Table 10

| | Ti 2p3/2 | Ti 2p1/2 | O 1s | Ti eV·cps | O eV·cps | O/Ti |
|---|---|---|---|---|---|---|
| Embodiment 9 | 458.6 | 464.4 | 529.9 | 17049 | 16571 | 1.95 |
| | | | | 14206 | 27618 | |
| Embodiment 8 | 458.6 | 464.1 | 529.9 | 28577 | 28591 | 2 |
| | | | | 23814 | 47652 | |
| JRC-3 without treatment | 458.9 | 464.5 | 529.8 | 26187 | 26049 | 1.99 |
| | | | | 21823 | 43415 | |

Embodiment 10

A 10 g quantity of Catalyst Society Reference Catalyst JRC-TIO-3 (rutile) was charged to a 400 mL quartz reaction tube. The quartz reaction tube was connected to a plasma generator, the interior of the system was evacuated with a vacuum pump, and $N_2$ gas (flow rate: 100 sccm) was introduced to the inner pressure of the system to about 1 Torr. While stirring, the titanium dioxide powder in the reaction tube was exposed to 600 W of electromagnetic waves (2.45 GHz) for 10 min, left standing for 10 min, and then plasma treated for 10 min, with this cycle being conducted seven times to obtain the light-responsive material of the present invention (the plasma treatment was conducted for eight ten-minute cycle).

Embodiment 11

A 10 g quantity of Catalyst Society Reference Catalyst JRC-TIO-3 (rutile) was charged to a 400 mL quartz reaction tube. The quartz reaction tube was connected to a plasma generator, the interior of the system was evacuated with a vacuum pump, and $N_2$ gas (flow rate: 100 seem) was introduced to the inner pressure of the system to about 1 Torr. While stirring, the titanium dioxide powder in the reaction tube was exposed to 600 W of electromagnetic waves (2.45 GHz) for 120 min to obtain the light-responsive material of the present invention (the plasma treatment was conducted continuously for 120 min).

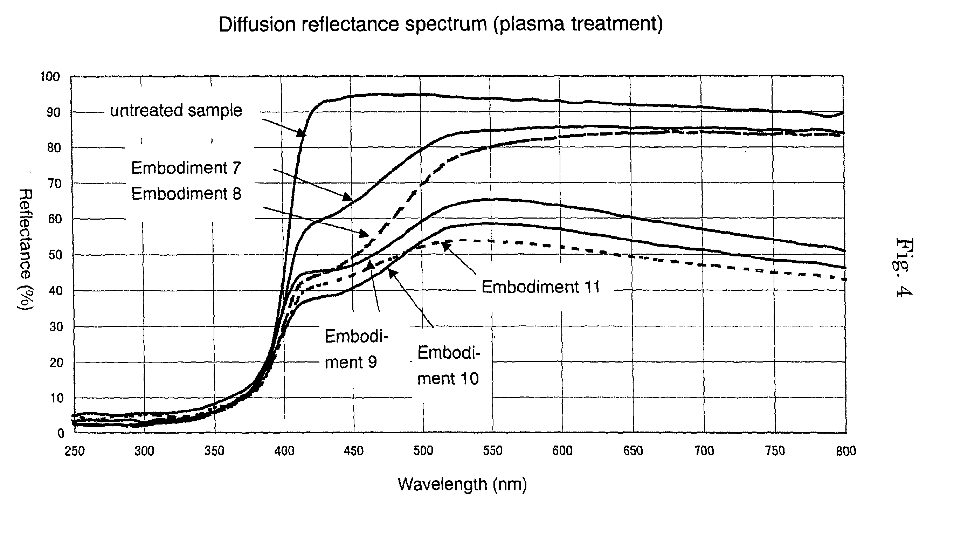

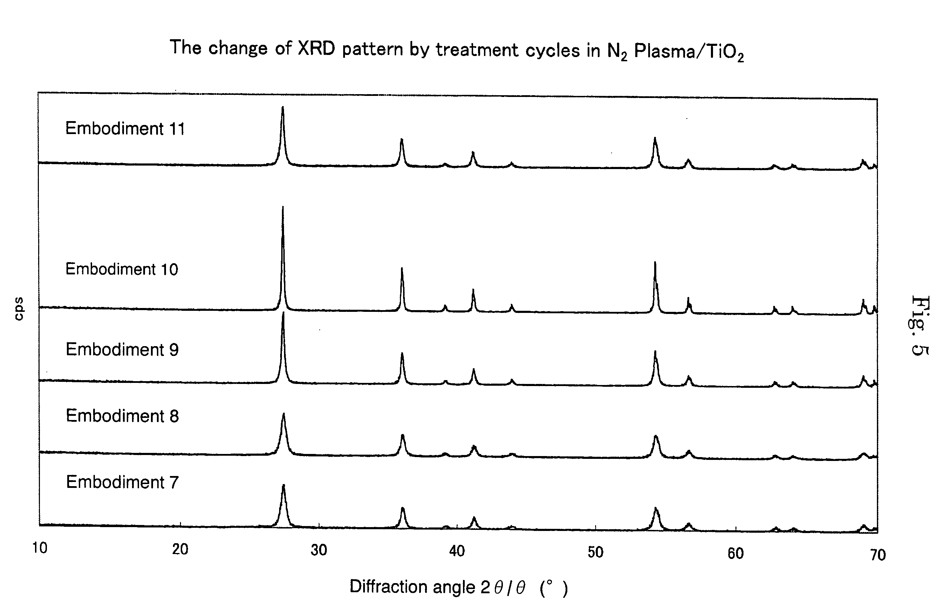

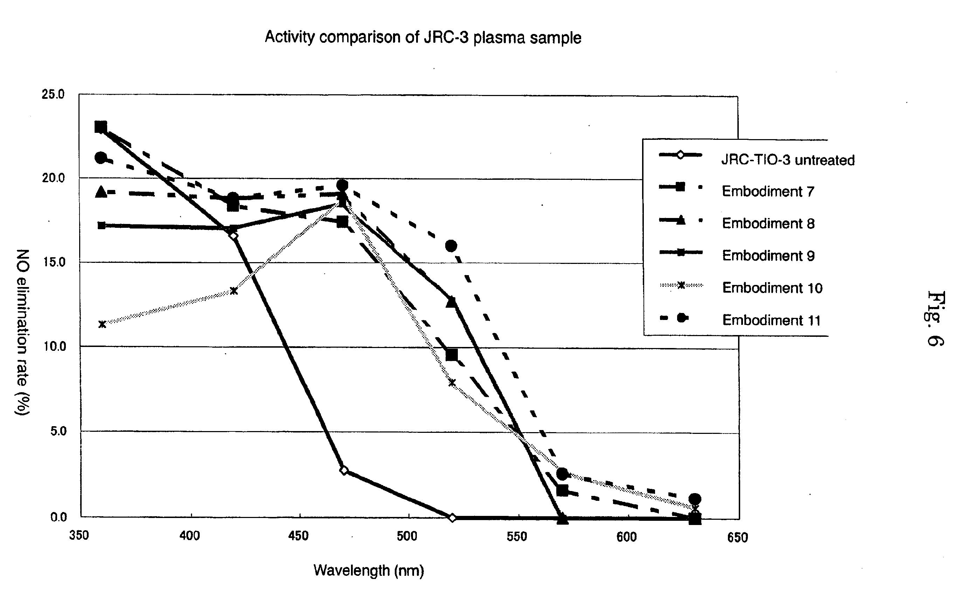

The reflectance spectra and XRD of the light-responsive materials obtained in Embodiment 7 to 11 and Catalyst Society Reference Catalyst JRC-TIO-3 (rutile) employed as a starting material were measured. The results are given in Figs. 4 and 5. Fig. 6 gives the NO elimination activity of the light-responsive materials obtained in Embodiments 7 to 11 and Catalyst Society Reference Catalyst JRC-TIO-3 (rutile) employed as a starting material as measured by the same method as in Test Example 4.

It is understood from the reflectance spectra of Fig. 4 that when the plasma treatment time or number of cycles increases, absorbance near 450 nm increases, and when the plasma treatment time or number of cycles increases more, absorbance in the region of 550 nm and above increases.

It is understood from the XRD results shown in Fig. 5 that when the plasma treatment time or number of cycles increases, rutile-type crystallinity increases.

It is understood from the results of NO elimination activity shown in Fig. 6 that all of the light-responsive materials of the present invention have NO elimination activity even when a light source having a peak wavelength at 520 nm is employed, sometimes exhibiting NO elimination activity even when a light source having a wavelength peak at 630 nm was employed.

Embodiment 12 (Photodecomposition of water)

A test of photodecomposition of water was conducted under the following conditions with the light-responsive materials of the present invention obtained in Embodiments 7 through 11.

Hydrogen generating capability and oxygen generating capability were measured under various conditions to examine the water decomposition activity performance of 0.2 g samples obtained in Embodiments 7 to 11. In the measurement of hydrogen generation, each of the samples was fixed by the impregnation method with chloroplatinic acid so that the content of platinum is 1 weight percent, 0.2 g of each platinum-fixed sample was dispersed in 200 mL of a 10 mole percent methanol aqueous solution, and a reaction was conducted with an externally illuminated closed-circulation system. A 300W-Xe lamp was employed as a light source to irradiate visible lights of 420 nm or more with a filter.

In the measurement of oxygen generation capability, 0.2 g of each sample was dispersed in 200 mL of a 0.01 mole/L silver nitrate aqueous solution and a reaction was conducted with an externally illuminated closed-circulation system. A 300W-Xe lamp was employed as a light source to irradiate visible lights of 420 nm or more with a filter.

The measurement conditions were as follows:

Closed circulation system 500 mL capacity reaction cell: Pyrex glass
Irradiation conditions: 300 W Xe lamp with 420 nm and below cut filter (model: LX-300F, Inotechs)
Product determination: gas chromatography (model: Shimadzu GC-8A)

(Hydrogen generating reaction)

| Sample pretreatment | Impregnation with 1 weight percent Pt platinum ammine complex and reduction by baking for 3 hours at 300°C in a hydrogen atmosphere. |
| --- | --- |
| Sample quantity | 0.2 g |
| Reaction solution | 200 mL of 10 mole percent methanol aqueous solution |

(Oxygen generating reaction)

| Sample quantity | 0.2 g |
| --- | --- |
| Reaction solution | 200 mL of 0.01 mole/L silver nitrate aqueous solution |

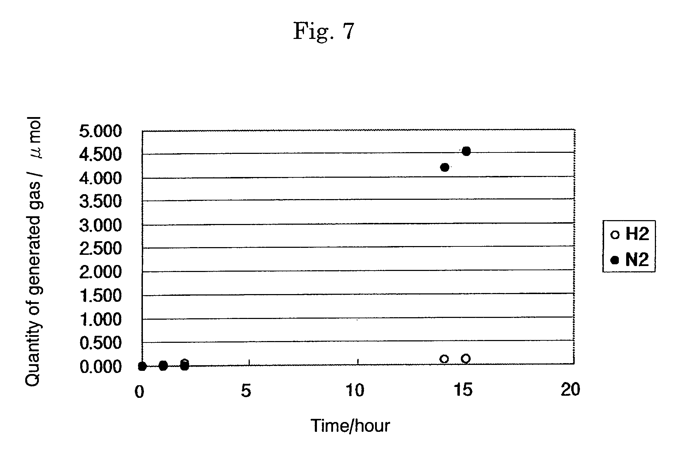

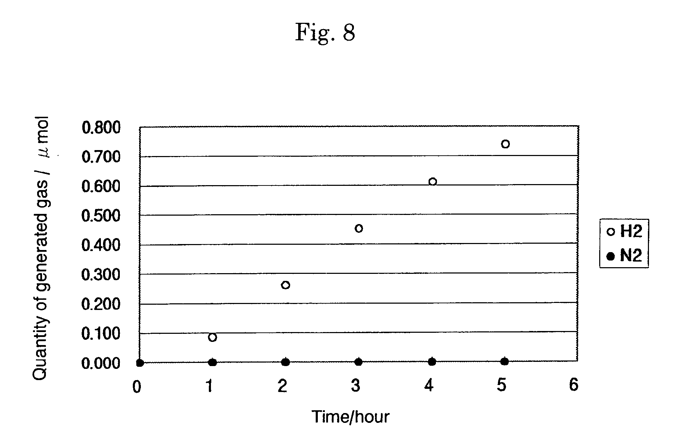

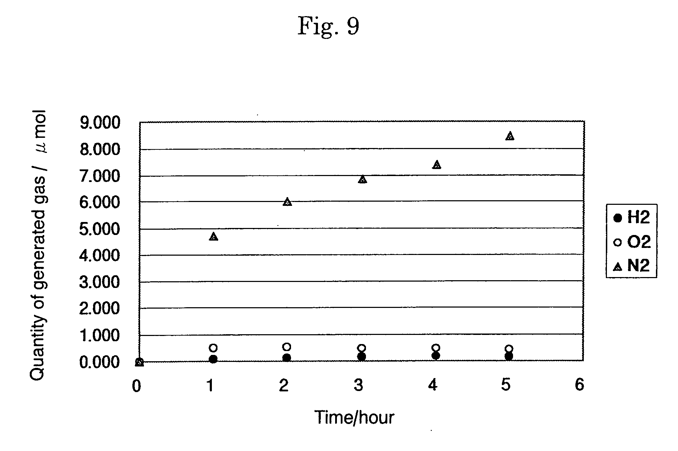

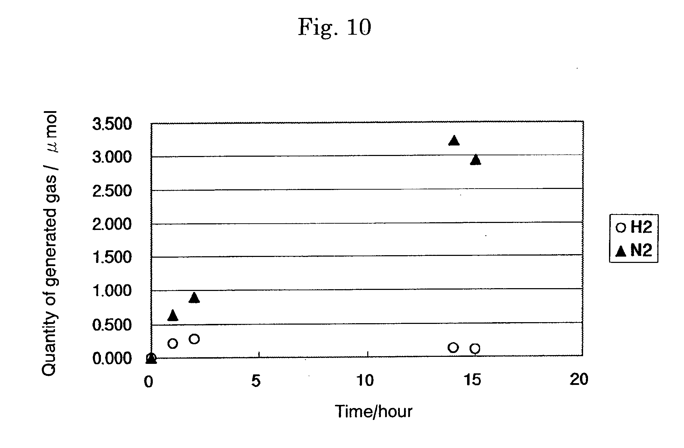

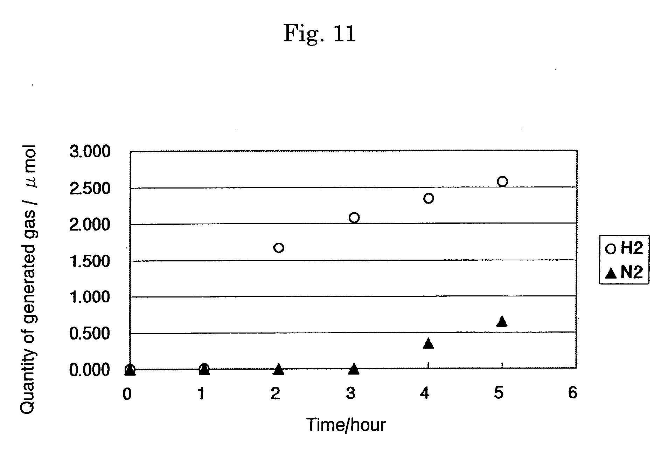

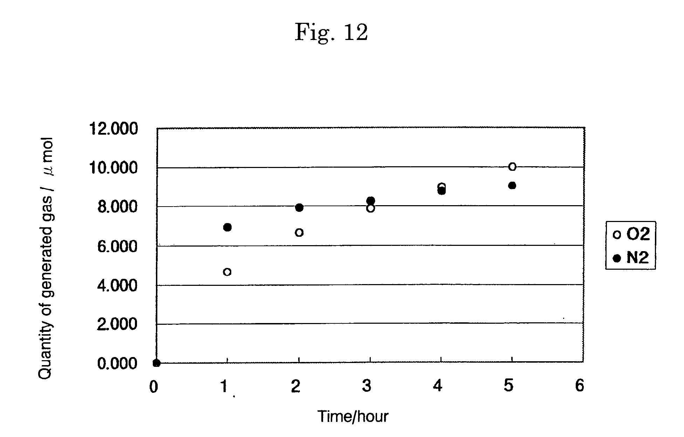

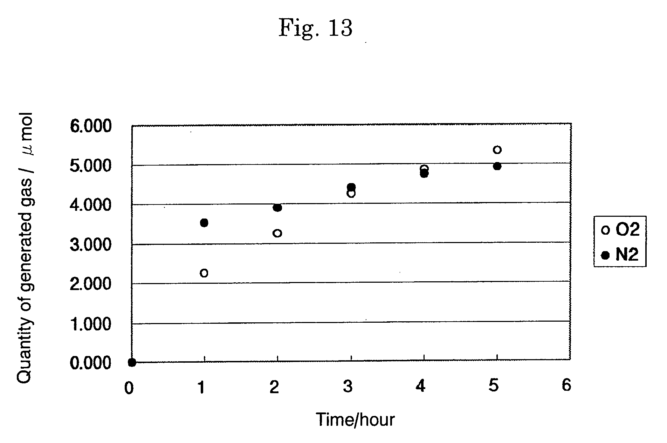

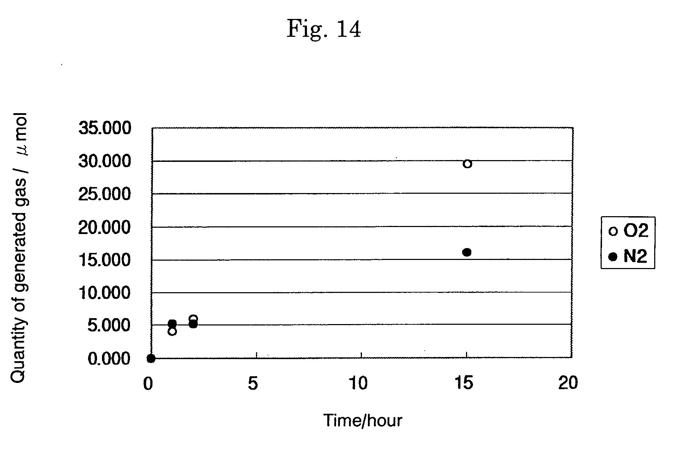

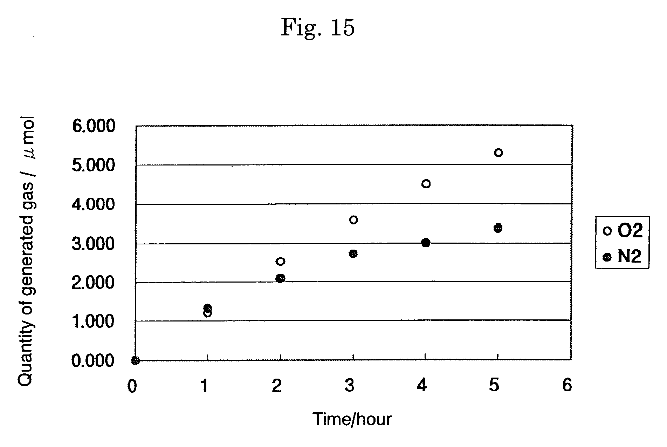

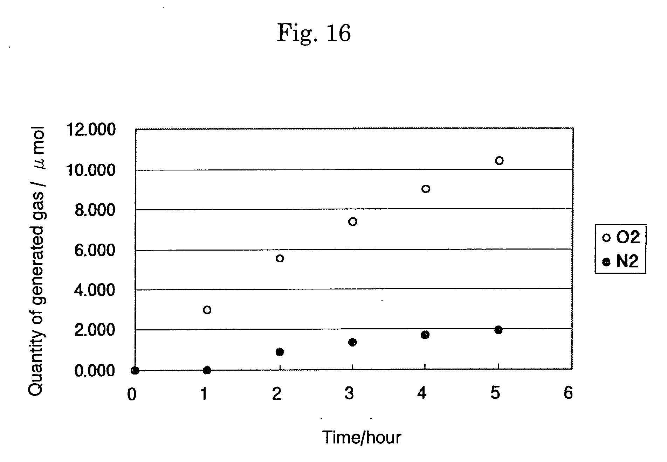

Figs. 7 to 11 give the results of the hydrogen generating reaction. Figs. 12 to 16 give the results of the oxygen generating reaction. In both the hydrogen and oxygen generating reactions, the generation of nitrogen was observed. This was attributed to photodecomposition of the light-responsive material of the present invention. Of these, the light-responsive material obtained in Embodiment 11 generated the least nitrogen and exhibited stable activity.

Embodiment 13

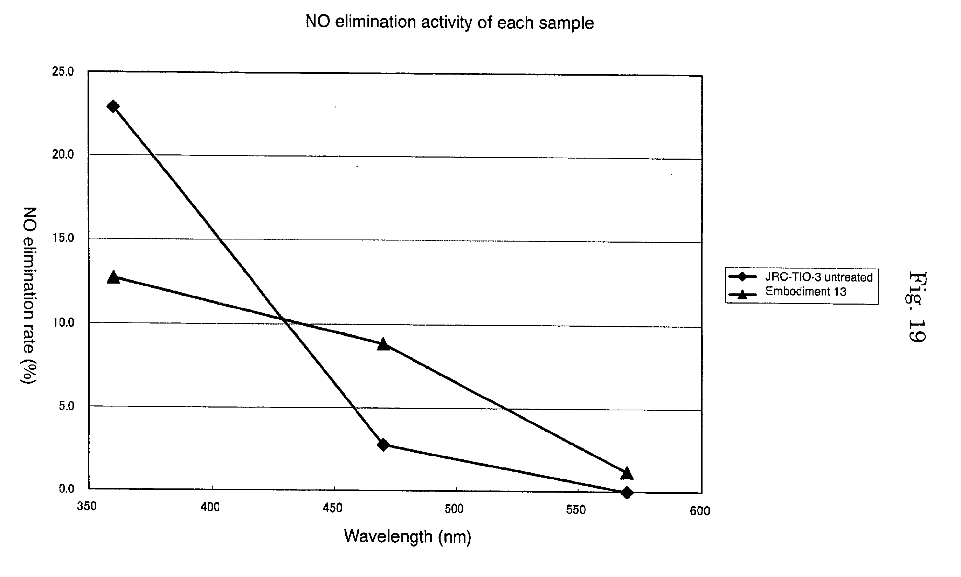

Using a quartz glass tube furnace (heating element: 30 cm x t 20 cm, quartz tube: 70 cm x t 2.5 cm), a total of 3 g of rutile-type titanium oxide (Catalyst Society Reference Catalyst JRC-TIO-3) was placed on baking boats, 1 g on each, and arranged along the tube furnace. The second baking boat was positioned almost in the center. $NH_3$ was circulated for 20 min at room temperature, after which an ammonia baking treatment was conducted by baking for 1 hour at 750°C in an $NH_3$ atmosphere ($NH_3$ flow rate: 50 sccm).
The samples were removed after cooling naturally in the ammonia atmosphere to room temperature.
The sample in the center baking boat became completely black, so that the downstream portion that had yellowed was collected, yielding the light-responsive material of the present invention.
XRD measurement was conducted of the sample of Embodiment 13 and the starting material Catalyst Society Reference Catalyst JRC-TIO-3.

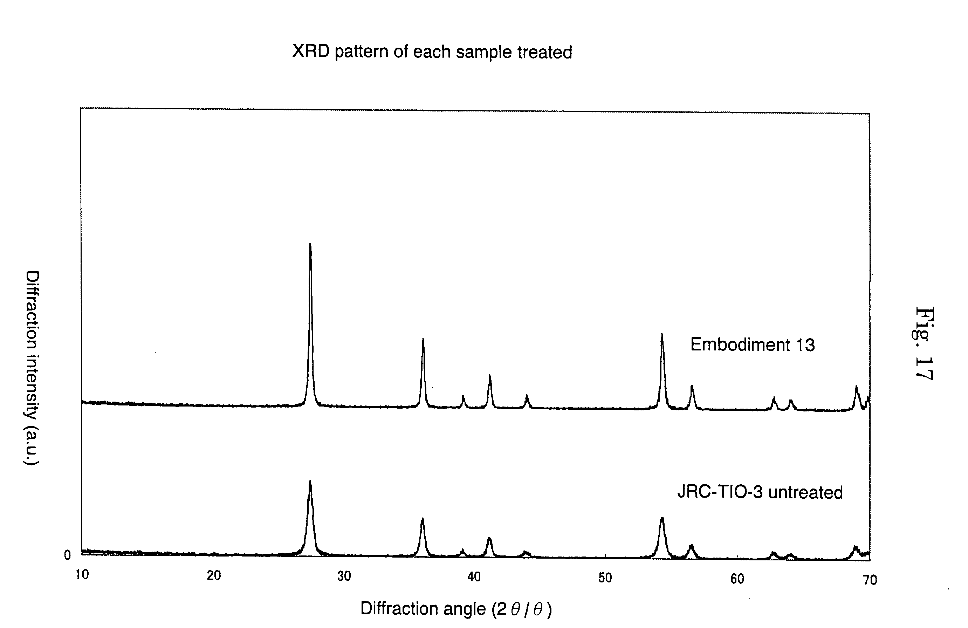

Fig. 17 gives the results. Crystal growth by heat treatment was confirmed. The generation of new peaks was not observed.
The UV spectrum of the sample of Embodiment 13 was measured. Fig.
18 gives the results.
The NO elimination activity of the sample of Embodiment 13 and the starting material Catalyst Society Reference Catalyst JRC-TIO-3 was measured by the same method as in Test Example 4. Fig. 19 gives the results.
The ESCA of the sample of Embodiment 13 and the starting material Catalyst Society Reference Catalyst JRC-TIO-3 was measured. The results are given below.

Table 11

| ESCA | | | | | | |
|---|---|---|---|---|---|---|
| | Ti2p3/2 | Ti2p1/2 | O1s | Ti eV·cps | O eV· cps | O/Ti |
| JRC-3 without treatment | 458.9 | 464.5 | 529.8 | 26187 | 26049 | 1.99 |
| | | | | 21823 | 43415 | |
| Embodiment 13 | 458.1 | 463.9 | 529.6 | 16561 | 18023 | 2.18 |
| | | | | 13800 | 30038 | |

The specific surface area of the sample of Embodiment 13 and the starting material Catalyst Society Reference Catalyst JRC-TIO-3 was calculated and is given in the table below.

Table 12

| Sample name | Specific surface area |
|---|---|
| JRC-TIO-3 | $49(m^2/g)$ |
| Embodiment 13 | $19(m^2/g)$ |

**Industrial applicability**

The present invention can impart a light responsive property to rutile-type titanium oxide conventionally having almost no responsive property in the visible light region. In particular, the present invention can provide a material capable of responding to light at wavelengths exceeding 600 nm, unknown in conventional visible light-responsive materials based on anatase-type titanium oxide. Further, since rutile-type titanium oxide is chemically more stable than anatase-type titanium oxide, the light-responsive material of the present invention is also highly stable.
Still further, the light-responsive material of the present invention can be employed in various applications.

**Claims**

1. A light-responsive material in the form of rutile-type titanium oxide with activity due to the effect of light from a light source with a peak wavelength of 520 nm and a full width at half maximum of 20 nm.

2. The light-responsive material according to claim 1 wherein the activity due to the effect of light is NO elimination activity.

3. The light-responsive material according to claim 1 or 2 in the form of nitrogen element-containing rutile-type titanium oxide.

4. The light-responsive material according to any of claims 1 to 3 having activity due to the effect of light from a light source with a peak wavelength of 630 nm and a full width at half maximum of 20 nm.

5. The light-responsive material according to any of claims 1 to 4 wherein a Ti-N bond is observed by X-ray photoelectron spectryscopy.

6. The light-responsive material according to any of claims 3 to 5 wherein the ratio of titanium to oxygen plus nitrogen are within a range of 1.5 to 2.4.

7. A method of manufacturing the light-responsive material according to any of claims 1 to 6 comprising the treatment of starting material rutile-type titanium oxide with nitrogen plasma.

8. A method of manufacturing the light-responsive material according to any of claims 1 to 6 comprising the heat treatment of starting material rutile-type titanium oxide in an ammonia atmosphere.

9. The method of manufacturing according to claim 7 or 8 wherein the starting material rutile-type titanium oxide is titanium oxide obtained by a wet method or dry method.

10. A method of activating a light-responsive material by irradiating the light-responsive material according to any of claims 1 to 6 with a light-emitting diode or organic electroluminescent material.

11. The method according to claim 10 wherein a gas comprising nitrogen oxide is brought into contact with a light-responsive material that has been irradiated with light comprising at least a portion of light in the visible light range to reduce the concentration of the nitrogen oxides in said gas, and said light-responsive material is the light-responsive material according to any of claims 1 to 6.

12. The method according to claim 11 wherein said light is light from a light-emitting diode.

13. The method according to claim 12 wherein said light-emitting diode is a purple light-emitting diode, blue light-emitting diode, green light-emitting diode, yellow light-emitting diode, or white light-emitting diode.

14. The method according to any of claims 11 to 13 wherein a device having a layer comprising a light-responsive material on a light-emitting diode substrate is employed.

15. The method according to claim 14 wherein the light-emitting diode substrate comprises at least a light-emitting diode and a light-passing layer provided thereon, and said layer containing a light-responsive material is provided on said light-passing layer.

16. The method according to any of claims 11 to 15 wherein said gas comprising nitrogen oxide is air.

17. A visible light-responsive paint comprising a binder, a light-responsive material, and a solvent, **characterized in that** said light-responsive material is the light-responsive material according to any of claims 1 to 6.

18. The paint according to claim 17 wherein said binder is an organic binder or an inorganic binder.

19. The paint according to claim 17 or 18 wherein said solvent is water or an organic solvent.

20. The paint according to claim 18 or 19 wherein said organic binder is at least one binder selected from the group consisting of fluoropolymers, silicon polymers, acrylic resins, epoxy resins, polyester resins, melamine resins, urethane resins, and alkyd resins.

21. The paint according to claim 18 or 19 wherein said inorganic binder is at least one binder selected from the group consisting of alkyl silicate, products obtained by hydrolyzing hydrolyte silicon compounds such as halogenated silicon and partially hydrolyzed products thereof; polycondensation products of organic polysiloxane compound; silicon compounds such as silica, colloidal silica, water-glass, and organopolysiloxanes; phosphates such as zinc phosphate and aluminum phosphate; diphosphates; cement; calcium oxide; gypsum; frit for enamel; glost for glass lining; plaster; and diatomaceous earth.

22. The paint according to any of claims 17 to 21 further comprising a granular substance, an adsorption agent and/ or a carrier.

23. The paint according to claim 22 wherein said granular substance is an inorganic or organic particle having an average particle size of 1 nm to 100 micrometers, and said adsorption agent and carrier are activated charcoal, zeolite, or silica gel.

24. A coating film in the form of a visible light-responsive coating film comprising a binder and a light-responsive material, **characterized in that** said light-responsive material is the light-responsive material according to any of claims 1 to 6.

25. The coating film according to claim 24 wherein said binder is an organic binder or inorganic binder.

26. The coating film according to claim 25 wherein said organic binder is at least one binder selected from the group consisting of fluoropolymers, silicon polymers, acrylic resins, epoxy resins, polyester resins, melamine resins, urethane resins, and alkyd resins.

27. The coating film according to claim 25 wherein said inorganic binder is at least one binder selected from the group consisting of alkyl silicate, products obtained by hydrolyzing hydrolyte silicon compounds such as halogenated silicon and partially hydrolyzed products thereof; polycondensation products of organic polysiloxane compound; silicon compounds such as silica, colloidal silica, water-glass, and organopolysiloxanes; phosphates such as zinc phosphate and aluminum phosphate; diphosphates; cement; calcium oxide; gypsum; frit for enamel; glost for glass lining; plaster; and diatomaceous earth.

28. The coating film according to any of claims 24 to 27 further comprising a granular substance, adsorption agent and/or carrier.

29. The coating film according to claim 28 wherein said granular substance is an inorganic or organic particle having an average particle size of from 1 to 100 micrometers, and said adsorption agent and carrier are activated charcoal, zeolite, or silica gel.

30. An article having on at least a portion of the surface thereof the coating film according to any of claims 24 to 29.

31. The article according to claim 30 wherein said article is composed of ceramics, glass, or other inorganic substance; plastic, rubber, wood, paper, or other organic substance; metals such as aluminum; or metallic material of alloys such as steel.

32. A method of sterilizing, preventing algae, preventing mildew and/or preventing stain, employing the light-responsive material according to any of claims 1 to 6.

33. A method of clarifying water employing the light-responsive material according to any of claims 1 to 6.

34. A method of photo-decomposition of water in which the light-responsive material according to any of claims 1 to 6 irradiated at least a portion of light in the visible light range is employed.

# Fig. 1

Fig. 2

Fig. 3

Diffusion reflectance spectrum (plasma treatment)

untreated sample

Embodiment 7
Embodiment 8

Embodiment 11

Embodi-
ment 9

Embodi-
ment 10

Reflectance (%)

Wavelength (nm)

Fig. 4

EP 1 393 803 A1

The change of XRD pattern by treatment cycles in $N_2$ Plasma/$TiO_2$

Embodiment 11

Embodiment 10

Embodiment 9

Embodiment 8

Embodiment 7

cps

Diffraction angle $2\theta/\theta$ (°)

EP 1 393 803 A1

Fig. 5

Fig. 6

Activity comparison of JRC-3 plasma sample

Fig. 7

Fig. 8

Fig. 9

Fig. 10

Fig. 11

Fig. 12

Fig. 13

Fig. 14

Fig. 15

Fig. 16

Fig. 17

XRD pattern of each sample treated

Embodiment 13

JRC-TIO-3 untreated

Diffraction angle ($2\theta / \theta$)

Diffraction intensity (a.u.)

# Fig. 18

Embodiment 13

Embodiment 13

Fig. 19

NO elimination activity of each sample

JRC-TiO-3 untreated
Embodiment 13

Wavelength (nm)

NO elimination rate (%)

## EUROPEAN SEARCH REPORT

**European Patent Office**

**Application Number**

EP 02 01 9367

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 205 244 A (TOYODA CHUO KENKYUSHO KK) 15 May 2002 (2002-05-15) <br> * page 2, line 56 - page 3, line 10 * <br> * page 4, line 16 - line 45 * <br> * page 6, line 36-38 * <br> * page 9, line 24-27 * <br> * page 10, line 36-38 * <br> * claims 1,3,9,20,22; example 4 * <br> --- | 1-34 | B01J35/00 <br> B01J21/06 <br> C01G23/04 |
| X | PATENT ABSTRACTS OF JAPAN <br> vol. 1997, no. 02, <br> 28 February 1997 (1997-02-28) <br> & JP 08 283022 A (YKK KK), <br> 29 October 1996 (1996-10-29) <br> * abstract * <br> --- | 1-34 | |
| X | WO 01 56928 A (SUGIHARA SHINICHI ;KIEDA NOBUO (JP); IHARA TATSUHIKO (JP); ECODEVI) <br> 9 August 2001 (2001-08-09) <br> & EP 1 254 863 A <br> 6 November 2002 (2002-11-06) <br> * page 4, line 44 - line 46 * <br> * page 6, line 15 - line 18 * <br> * page 6, line 38 - line 47 * <br> * example 4 * <br> --- | 1-6,8,9 | **TECHNICAL FIELDS SEARCHED (Int.Cl.7)** <br> B01J <br> C01G |
| X <br><br> D | EP 1 125 636 A (ECODEVICE LAB CO LTD) <br> 22 August 2001 (2001-08-22) <br> * page 4, line 4 - line 6 * <br> * page 6, line 8 - line 13 * <br> & WO 00 10706 A 2 March 2000 (2000-03-02) <br> --- | 1,2 | |
| X | US 6 365 545 B1 (HARADA AKIO ET AL) <br> 2 April 2002 (2002-04-02) <br> * column 12, line 17 - line 25; claim 1; figure 1; example 1 * <br> ----- | 1 | |

The present search report has been drawn up for all claims

| Place of search | Date of completion of the search | Examiner |
|---|---|---|
| MUNICH | 16 January 2003 | Schoofs, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 393 803 A1

## ANNEX TO THE EUROPEAN SEARCH REPORT
## ON EUROPEAN PATENT APPLICATION NO.

EP 02 01 9367

16-01-2003

| Patent document cited in search report | | Publication date | Patent family member(s) | | Publication date |
|---|---|---|---|---|---|
| EP 1205244 | A | 15-05-2002 | EP | 1205244 A1 | 15-05-2002 |
| | | | US | 2002169076 A1 | 14-11-2002 |
| | | | EP | 1205245 A1 | 15-05-2002 |
| | | | WO | 0110552 A1 | 15-02-2001 |
| | | | WO | 0110553 A1 | 15-02-2001 |
| JP 08283022 | A | 29-10-1996 | NONE | | |
| WO 0156928 | A | 09-08-2001 | AU | 2884901 A | 14-08-2001 |
| | | | EP | 1254863 A1 | 06-11-2002 |
| | | | WO | 0156928 A1 | 09-08-2001 |
| | | | JP | 3215698 B1 | 09-10-2001 |
| | | | JP | 2002255554 A | 11-09-2002 |
| | | | JP | 2002255555 A | 11-09-2002 |
| EP 1125636 | A | 22-08-2001 | AU | 5198099 A | 14-03-2000 |
| | | | EP | 1125636 A1 | 22-08-2001 |
| | | | WO | 0010706 A1 | 02-03-2000 |
| | | | JP | 3252136 B2 | 28-01-2002 |
| | | | JP | 2001212457 A | 07-08-2001 |
| US 6365545 | B1 | 02-04-2002 | JP | 10146531 A | 02-06-1998 |
| | | | JP | 11047611 A | 23-02-1999 |
| | | | EP | 0882504 A1 | 09-12-1998 |
| | | | WO | 9811984 A1 | 26-03-1998 |
| | | | US | 6121191 A | 19-09-2000 |
| | | | US | 6265341 B1 | 24-07-2001 |

EPO FORM P0459